# EUROPEAN PATENT SPECIFICATION

(11) **EP 3 241 317 B1**
(45) Date of publication and mention of the grant of the patent: **04.07.2018**
(21) Application number: 15820879.3
(22) Date of filing: 31.12.2015
(51) Int. Cl.: G05B 19/042, H04L 12/28

(54) **MONITORING SYSTEM**
ÜBERWACHUNGSSYSTEM
SYSTÈME DE SURVEILLANCE

(30) Priority: 02.01.2015 US 201514588500; 02.01.2015 US 201514588510
(43) Date of publication of application: 08.11.2017
(73) Proprietor: Xeros Limited, Whittle Way, Catcliffe Rotherham South Yorkshire S60 5BL (GB)
(72) Inventor: BASLER, James, Foxboro, Massachusetts 02035 (US); CARLEO,Mark, South Hamilton, Massachusetts 01982 (US)
(74) Representative: Carpmaels & Ransford LLP
(86) International application number: PCT/GB2015/054181
(87) International publication number: WO 2016/108051

(56) References cited:
- EP-A1- 1 744 248
- EP-A1- 2 413 536
- US-A1- 2002 095 269
- US-A1- 2012 254 974

## Description

### Field of the invention

The present invention relates to a monitoring system for monitoring an appliance. More specifically, the invention is concerned with an appliance monitoring and reporting system, a method of monitoring an appliance and a data acquisition device for monitoring an appliance, and a relay state sensor.

### Background to the invention

It is known to monitor the operation of appliances for a variety of purposes.

Appliances, including washing machines, dryers, dishwashers and the like, use utilities (including products), such as chemicals, water, gas and electricity during operation. Systems are known which monitor the utility usage of an appliance over time. These systems are typically used to measure the efficiency of an appliance and for the generation of management reports, when usage data is combined with the costs of the utilities.

One such system is described in US patent number US 6,377,868, in the name of Gardner Jr. and assigned to Ecolab, Inc. The patent, entitled "DATA PROCESSING SYSTEM FOR MANAGING CHEMICAL PRODUCT USAGE", is one of a family of patents in the same name, describe a system for monitoring chemical product usage by an automated chemical product dispenser of the kind which is typically found connected to one or more washing machines in a commercial laundry. The system comprises a monitor module, typically the controller of the dispenser, which records chemical usage data of the dispenser over time and forwards the data to a central server for display.

Another such system is described in a US patent application with the publication number US 2013/0135116, in the name of Garbe. The patent application, entitled "METHOD FOR PROCESSING DATA IN A DOMESTIC APPLIANCE, DOMESTIC APPLIANCE AND SYSTEM HAVING A DOMESTIC APPLIANCE AND AT LEAST ONE EXTERNAL UNIT", describes a washing machine having an integrated appliance data determination unit coupled to a control unit of the washing machine. The appliance data determination unit communicates with the control unit of the washing machine to receive appliance data, including cycles of operation, the time at which the cycles of operation are performed, and energy consumption data of the appliance. The data is then incorporated into a user profile either by the appliance data determination unit itself or by an external device. The user profile comprises a record of operation and usage data for the appliance over time.

Other systems are known to monitor abnormal events during operation of an appliance. One such system is described in US patent number US 6,778,868, in the name of Imamura. The patent, entitled "REMOTE CONTROL OF LAUNDRY APPLIANCE", describes a washing machine having a laundry appliance control section, which is adapted to detect abnormal conditions of operation of the washing machine and to send error codes indicative of the abnormal condition to a server for analysis.

The above-described monitoring systems are either integrated into a controller of an appliance or are configured to be connected to and communicate with the controller of an appliance. These systems must therefore be specifically programmed to interact with the controller of a particular appliance. Accordingly, these systems must be pre-installed during manufacture of the appliance and supplied as integral components for each appliance.

In some situations, it is desirable to monitor utility usage of an appliance which is not pre-installed with a bespoke system for doing so. For example, a commercial laundry may operate a suite of washing machines and dryers which have no utility monitoring capability. Such appliances may have served the owner well for many years, in which case the owner would be very reluctant to replace them with more sophisticated machines. Although the laundry owner could utilise the chemical product dispenser described in US 6,377,868 to Ecolab, Inc., to provide some monitoring of the chemical usage in the laundry, this is not an optimal solution. Firstly, the dispenser would not provide the owner with information on utilities other than chemicals; and secondly a dispenser serving a plurality of washing machines would not be able to discern utility usage of each machine. It would therefore be desirable for an appliance vendor to be able to provide prospective customers such as the laundry owner with a tool that can monitor the prospective customer's existing appliances and utility usage.

EP 1744248 A1 discloses a monitoring device for an electric appliance, comprising electronic control means and data and/or information storage means. The monitoring device is typically connected to a first communication network, which is adapted to connect at least one sensing device, being capable of measuring at least one value of at least one physical quantity related to the monitored electric appliance, to the monitoring device.

US 2002/0095269 discloses an appliance monitoring system for use with household appliances, which includes subsystems for continuously monitoring the operations of one or more appliances and a gateway through which the subsystems communicate with a remote center that oversees the servicing of the appliances. The subsystem associated with a particular appliance tracks various operating parameters and conditions, such as the total number, type, times, and duration of operating cycles; energy consumption during the cycles; and/or the states of various components such as intake valves, doors, sensors, and so forth, during the operating cycles.

EP 2413536 A1 discloses a method and system for monitoring an appliance. The method includes establishing a wireless communication connection between a communication module in an appliance and a communication network, transmitting operational data in real-time from the appliance to an external monitoring system over the communication network, determining a status of a component of the appliance from the real-time operational data, and if a failure mode of the component is detected, initiating a service protocol corresponding to the component.

### Summary of the invention

According to a first aspect of the invention there is provided an appliance monitoring and reporting system according to claim 1.

According to a second aspect of the invention, there is provided a method of monitoring an appliance according to claim 13.

According to a other aspects of the invention there is provided a data acquisition module according to claim 24, a data processing module according to claim 25, and data acquisition device according to claim 26.

Optional features of the invention are set out in the dependent claims.

### Brief Description of the Drawings

Embodiments of the invention will now be described, by way of example with reference to the drawings of which:
- Figure 1: shows a diagrammatic view of an appliance monitoring and reporting system of the present invention;
- Figure 2: shows a diagrammatic view of a washing machine to be monitored by the appliance monitoring and reporting system of Figure 1;
- Figure 3: shows a diagrammatic view of an appliance monitoring and reporting system of the present invention, including a data acquisition module of the present invention;
- Figure 4: shows a diagrammatic view of an interface of the data acquisition module of Figure 3;
- Figure 5: shows a diagrammatic view of an alternative appliance monitoring and reporting system of the present invention attached to a washing machine;
- Figure 6: shows a diagrammatic view of a further alternative appliance monitoring and reporting system of the present invention attached to a washing machine;

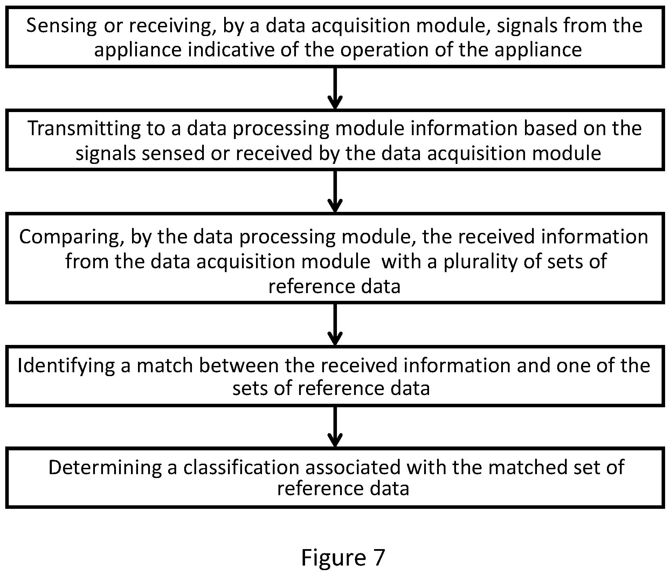

- Figure 7: shows a flow diagram of a method of an embodiment of the present invention.
- Figure 8A: shows a side view of a relay state sensor of the present invention;
- Figure 8B: shows a side view of an alternative relay state sensor of the present invention;

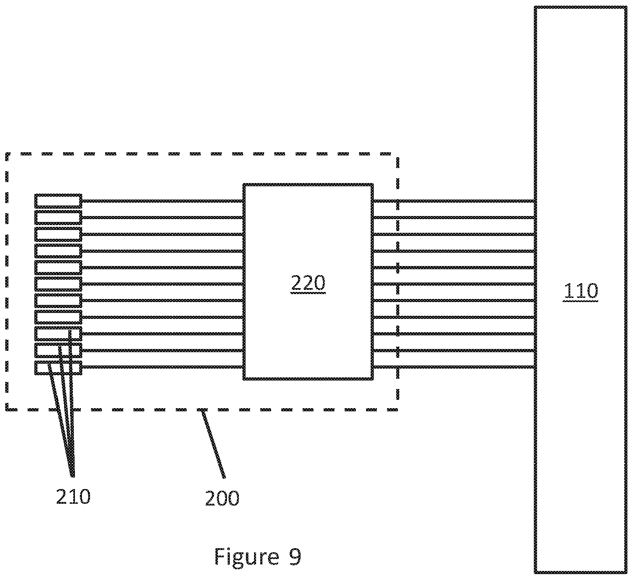

- Figure 9: shows a diagrammatic view of the interface, hub and sensors of Figure 3;
- Figures 10A & B: show diagrammatic views of the connections between an interface of a data acquisition module of an embodiment of the present invention and a washing machine;
- Figures 11A, B & C: show diagrammatic views of the connections between an interface of a data acquisition module of an embodiment of the present invention, a passive hub and an array of sensors;
- Figures 12A, B & C: show diagrammatic views of the connections between an interface of a data acquisition module of an embodiment of the present invention, a passive hub and an array of sensors;
- Figure 13: shows a diagrammatic view of the connections between an interface of a data acquisition module of an embodiment of the present invention and utility meters;
- Figure 14: shows a diagrammatic view of the connections between an interface of a data acquisition module of an embodiment of the present invention and a serial to USB converter;
- Figure 15: shows part of a circuit diagram of an interface of a data acquisition module of an embodiment of the present invention;
- Figures 16A, B & C: show further parts of a circuit diagram of the interface of Figure 15;
- Figures 17A, B, C, D & E: show further parts of a circuit diagram of the interface of Figure 15;
- Figures 18A, B & C: show further parts of a circuit diagram of the interface of Figure 15;
- Figures 19A, B & C: show further parts of a circuit diagram of the interface of Figure 15;
- Figure 20: shows a printed circuit board of a passive hub of an embodiment of the present invention;
- Figure 21: shows a perspective view of a housing for the printed circuit board of the passive hub of Figure 20;
- Figures 22A, B, C, D: show multiple cross-sections of the housing of Figure 21;
- Figures 23A, B, C & D: show exploded views of the housing of Figure 22;
- Figure 24: shows a perspective view of a relay state sensor of an embodiment of the present invention;
- Figure 25: shows multiple relay state sensors of an embodiment of the present invention which are removably attached to relays on an output board of a washing machine;
- Figure 26: shows a single relay state sensor of an embodiment of the present invention which is removably attached to a relay on an output board of a washing machine; and
- Figure 27: shows a perspective view of a device according to the present invention comprising parts of a data acquisition module and data processing module in a single housing.

### Detailed Description of the Invention

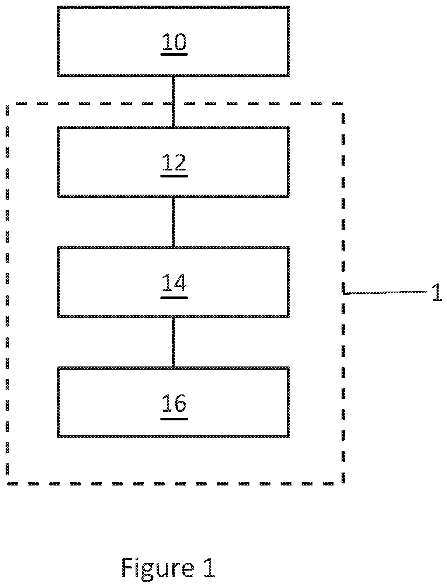

Referring to Figure 1, an appliance monitoring and reporting system 1 of the present invention is provided. A monitoring system refers to a system which does not influence control of an appliance. The system of the present invention may be implemented as a passive system, which does not affect a cycle of operation of an appliance being monitored and which is not configured to send remote control signals to the appliance. However, it would be possible to incorporate a system of the present invention into an appliance which does apply remote control to an appliance so as to provide monitoring and control together.

The appliance monitoring and reporting system 1 of figure 1 comprises a data acquisition module 12 which is removably attached to an appliance 10. For the avoidance of doubt, the data acquisition module 12 may be constituted as a data acquisition device 12 housed independently of other constituent parts of an appliance monitoring and reporting system. Alternatively, a data acquisition module 12 may be part of, and housed within, a device comprising other constituent parts of an appliance monitoring and reporting system, such as (but not limited to) a data processing module, described in more detail below.

Removable attachment of the data acquisition module 12 to the appliance 10 refers to a removable fixing or fastening of one or more sensors (not shown) of the data acquisition module 12 to one or more components of the appliance 10 and can also refer to a removable electrical connection of the data acquisition module 12 to an output of an appliance 10. Where sensors are fixed or fastened to components of the appliance 10, the sensors are typically electrically isolated from the components. Thus, the data acquisition module 12 is detachable from the appliance 10, and in particular the attachment, connection, fixation or fastening of the module 12 to the appliance 10 is reversible without significant structural modification of the appliance 10 and without alteration of the operation of the appliance. Preferably the module 12 of the present invention is intended to be removable from the appliance 10 without a trace.

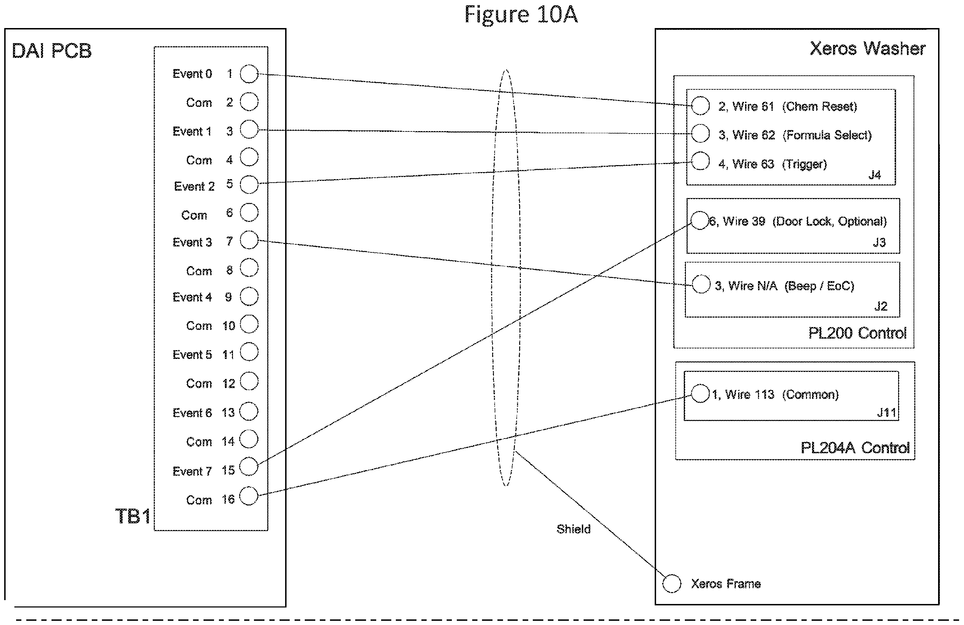

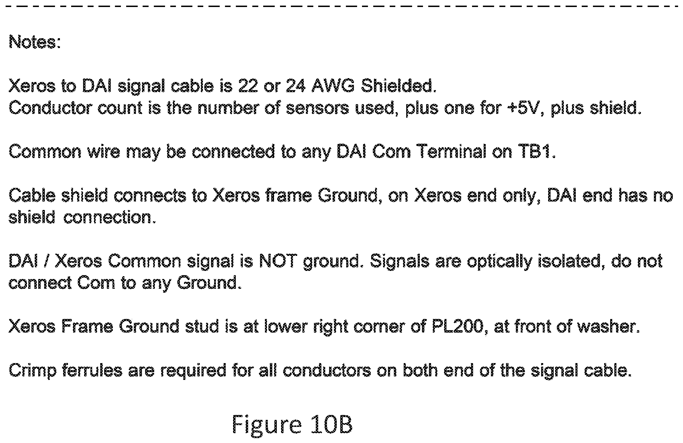

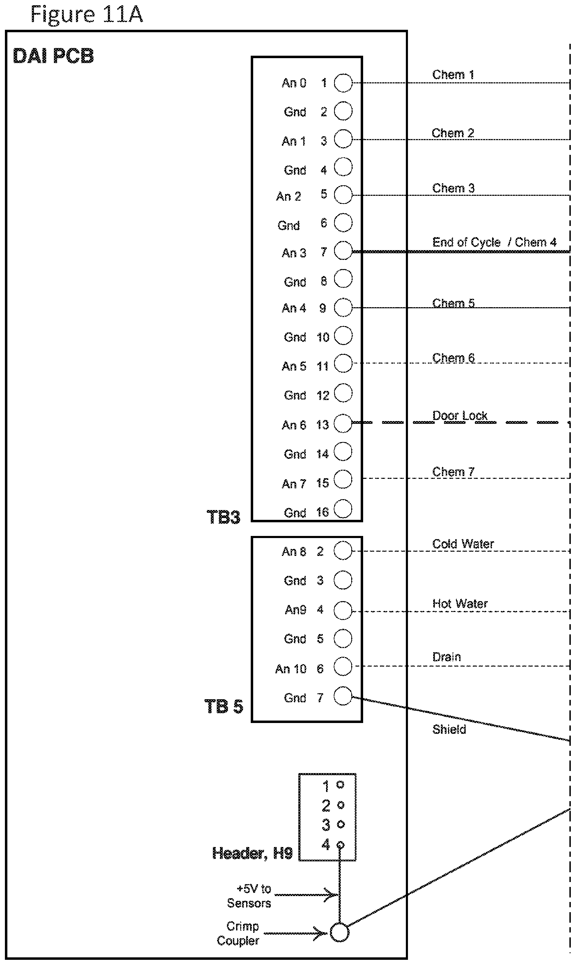

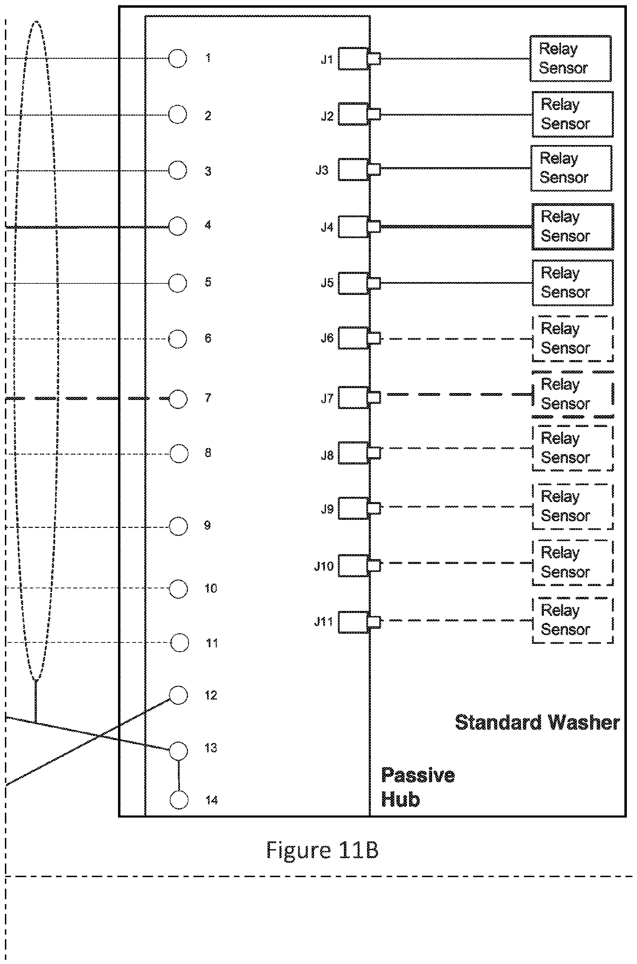

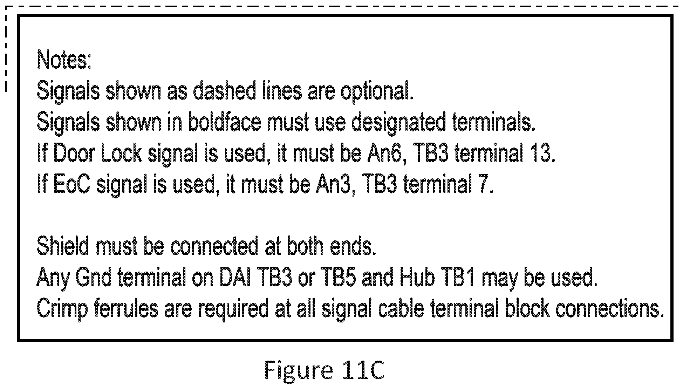

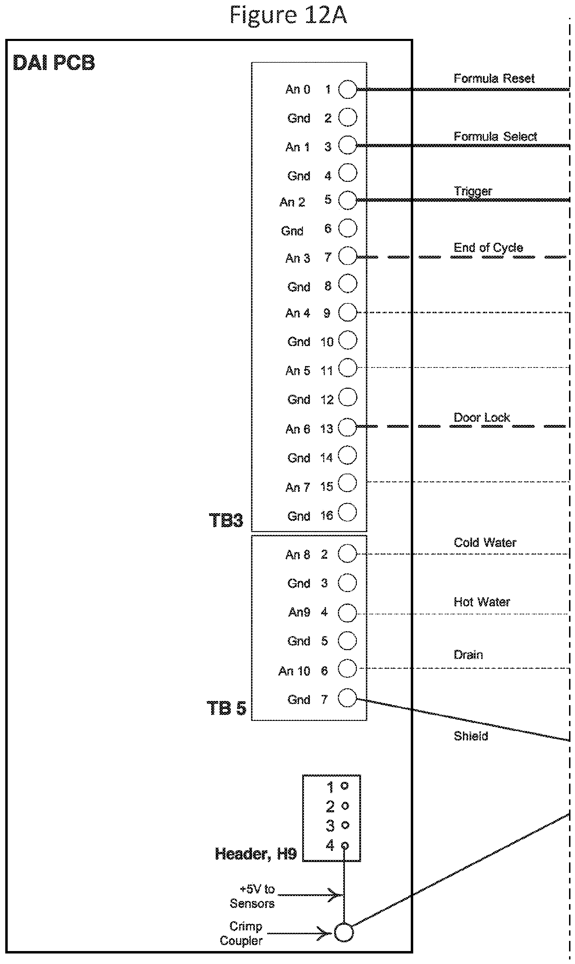

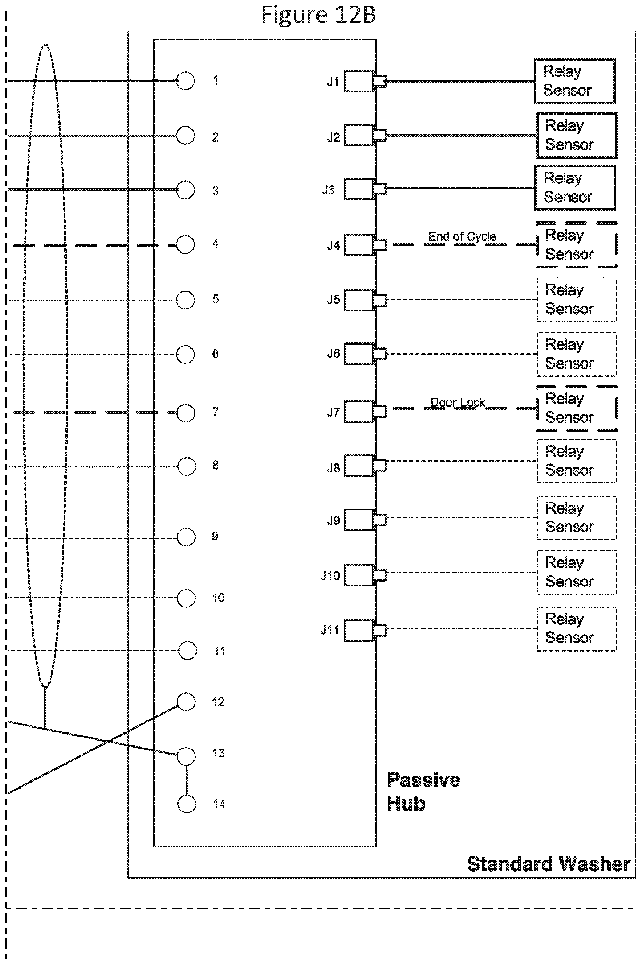

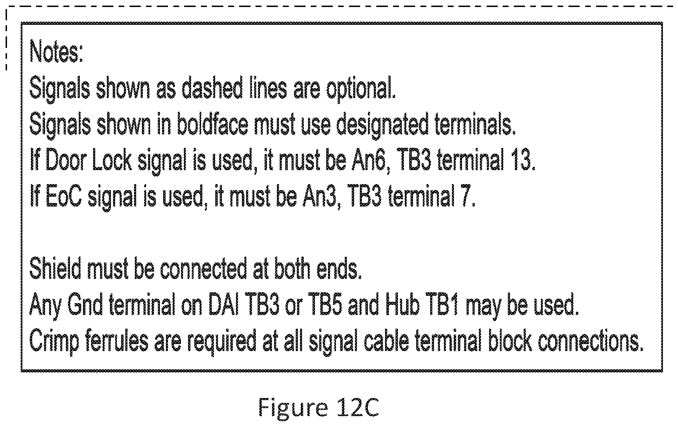

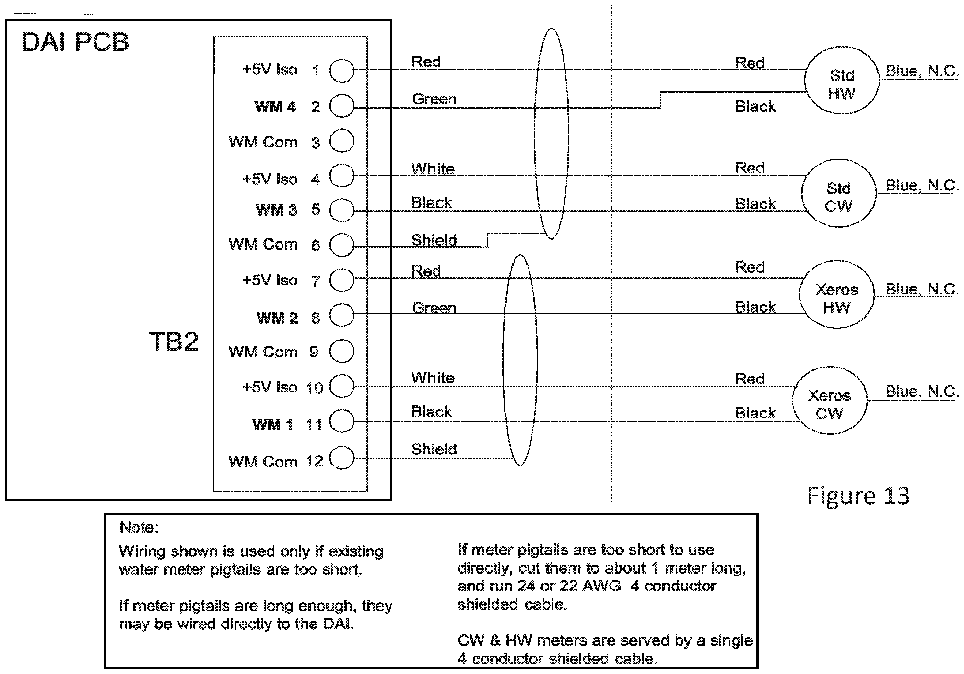

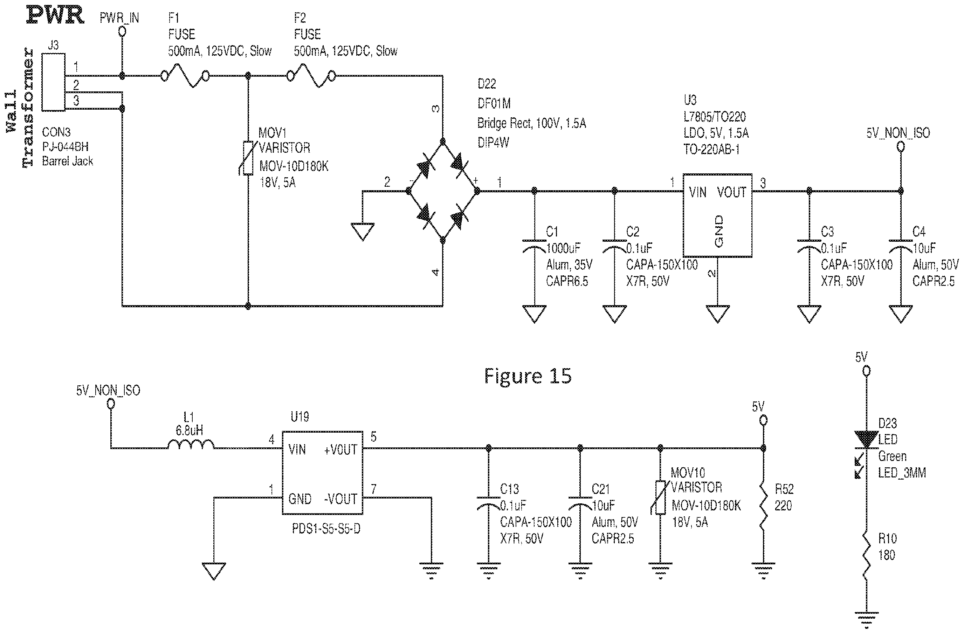

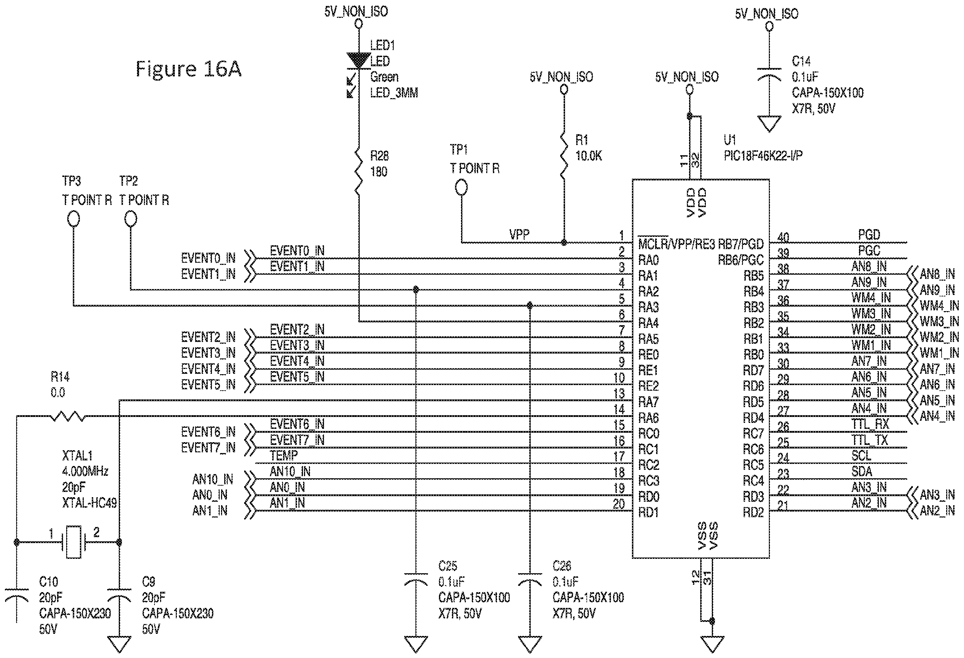

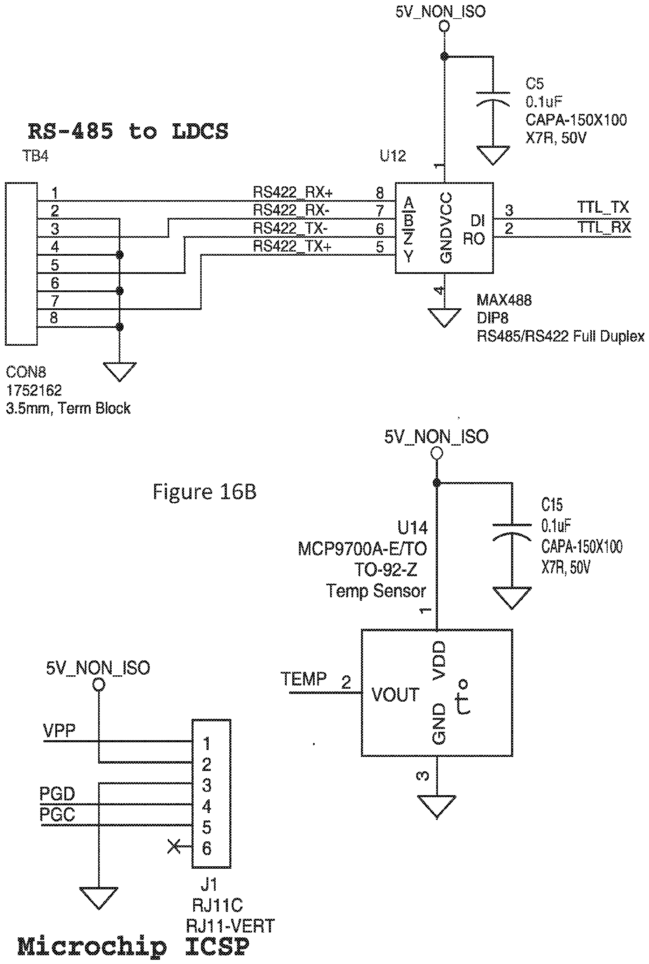

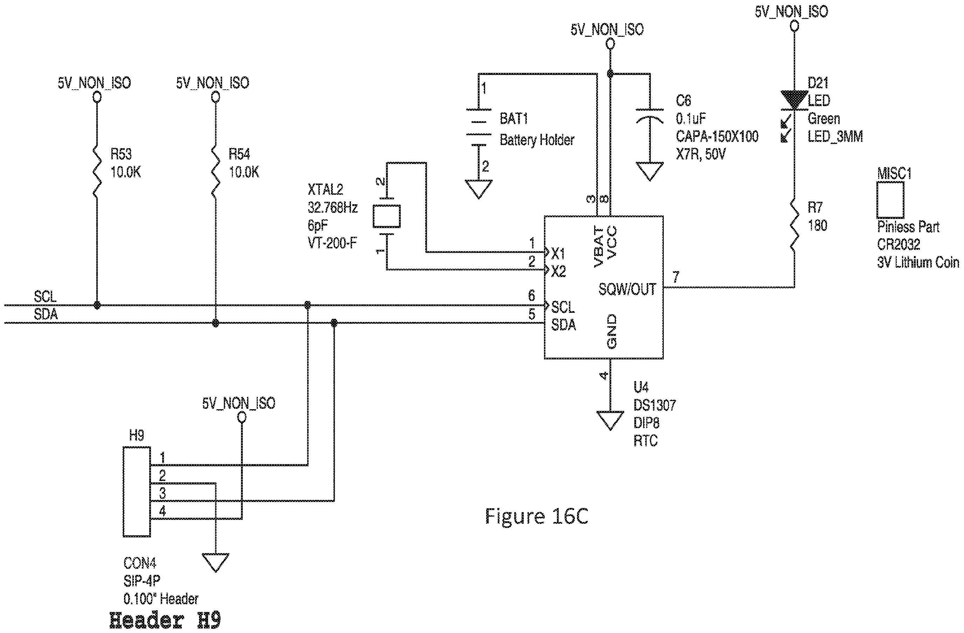

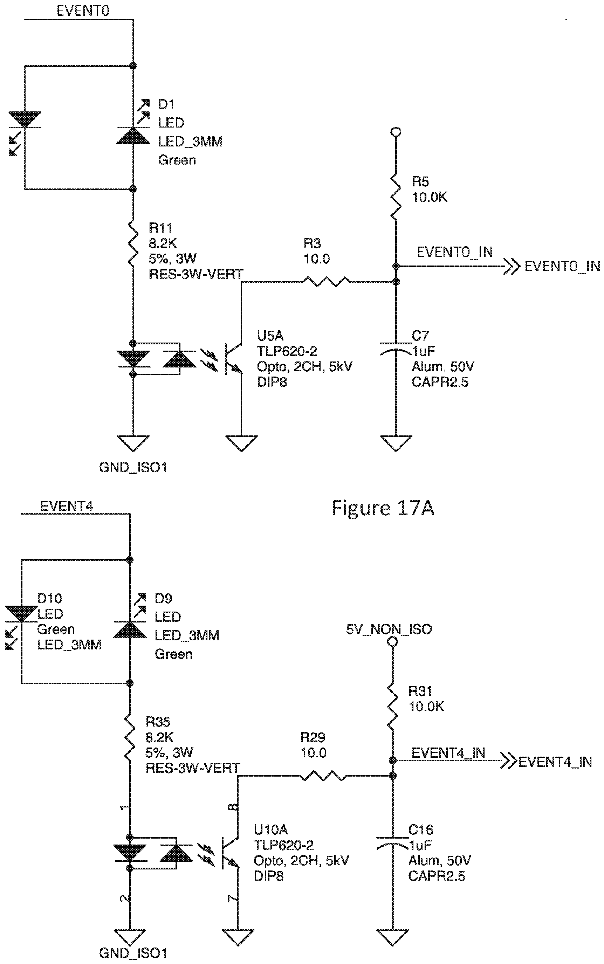

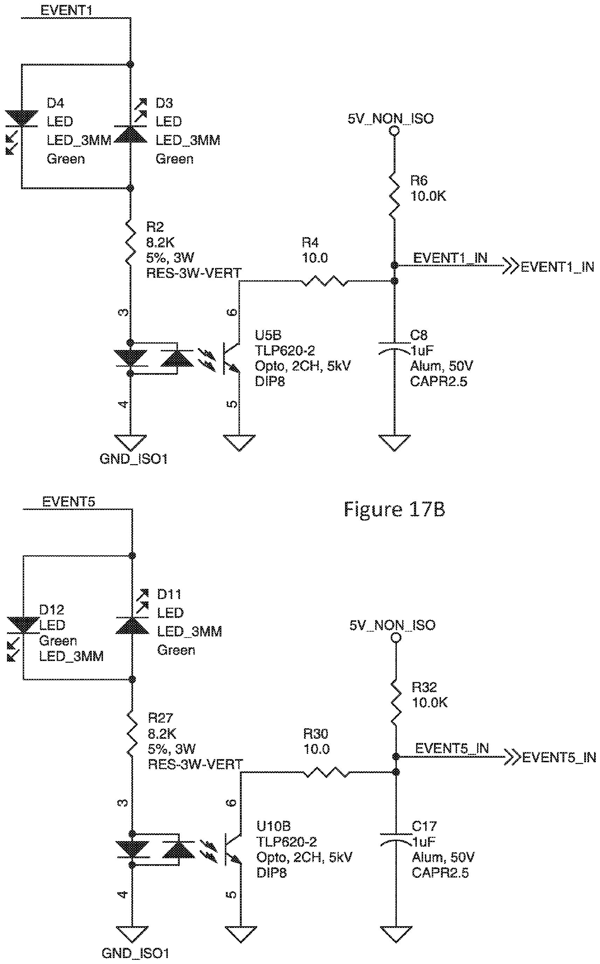

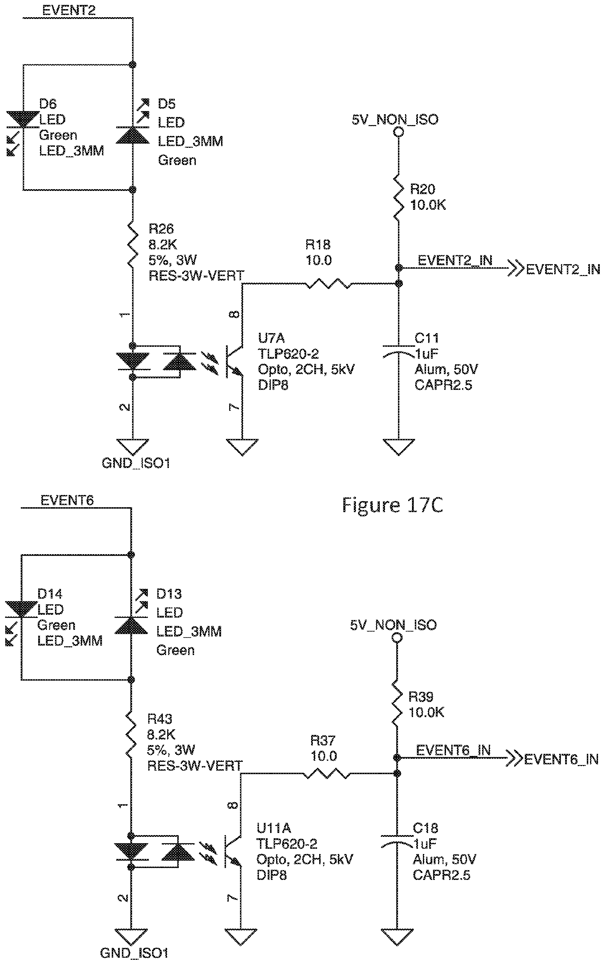

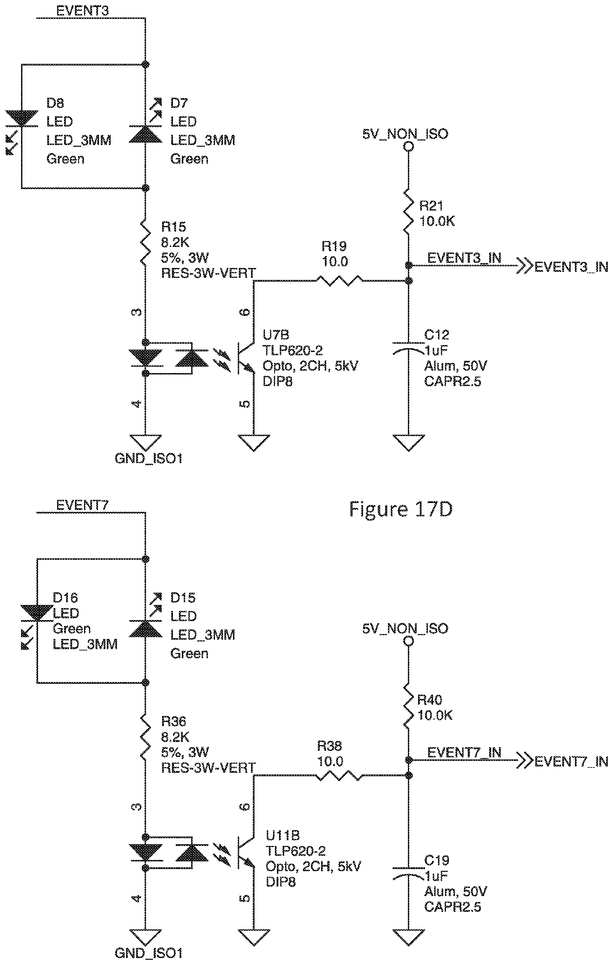

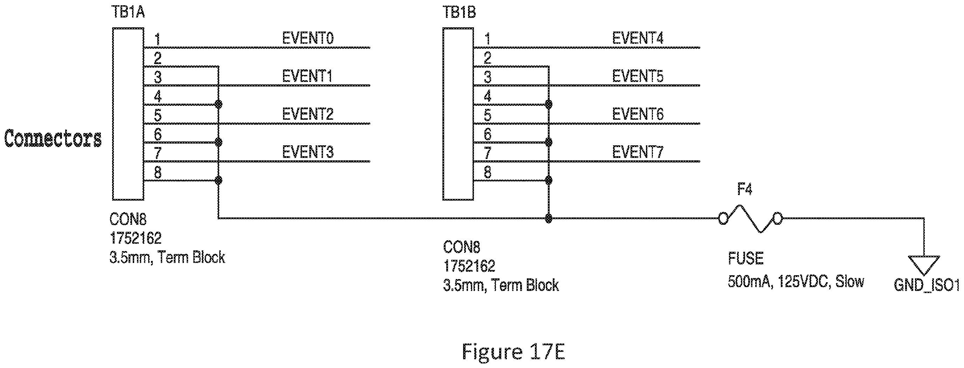

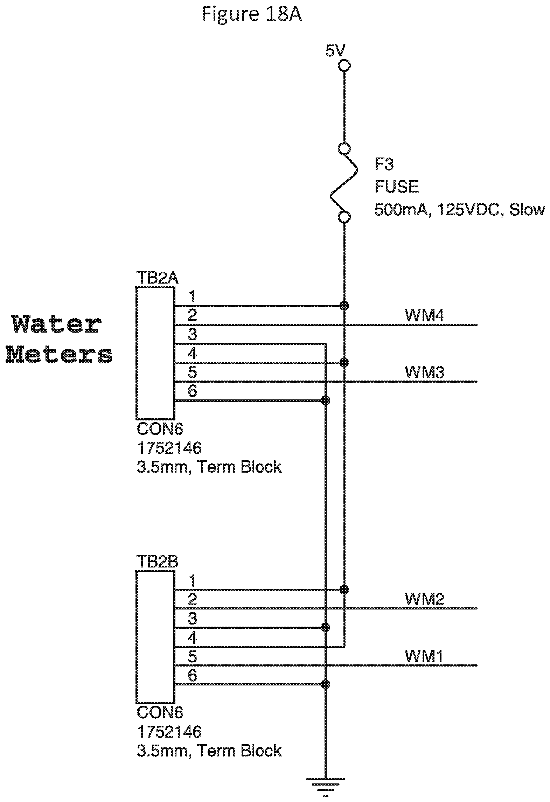

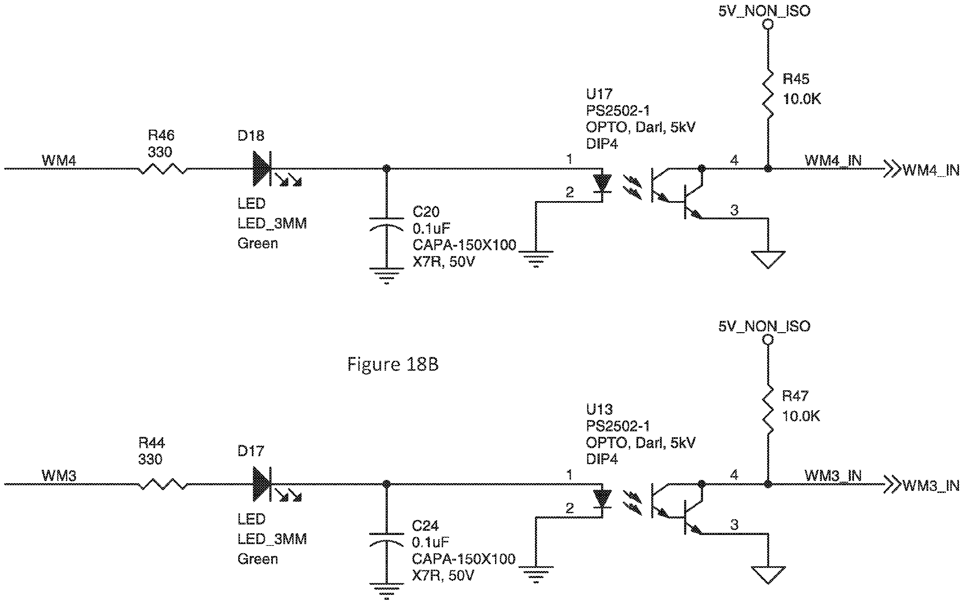

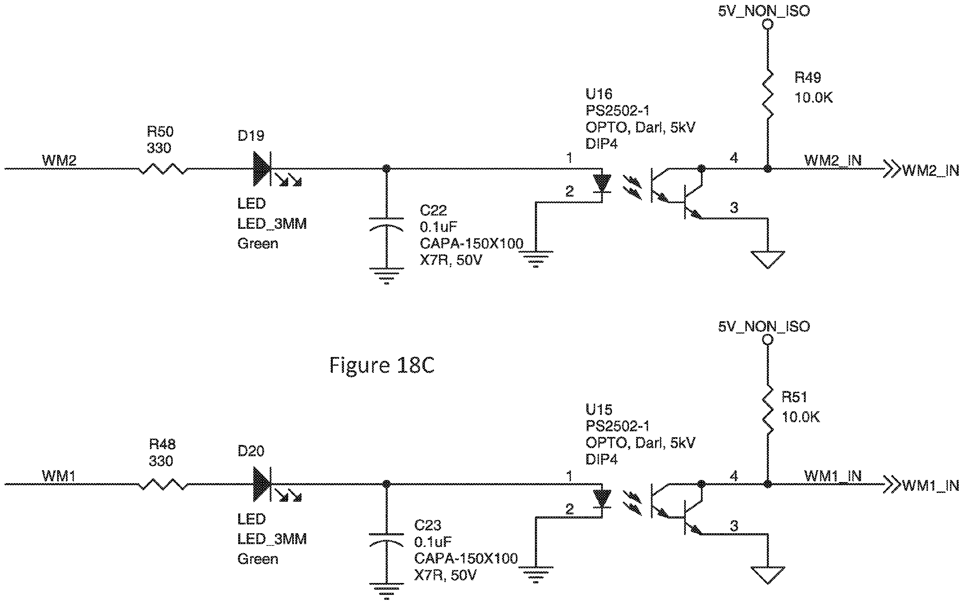

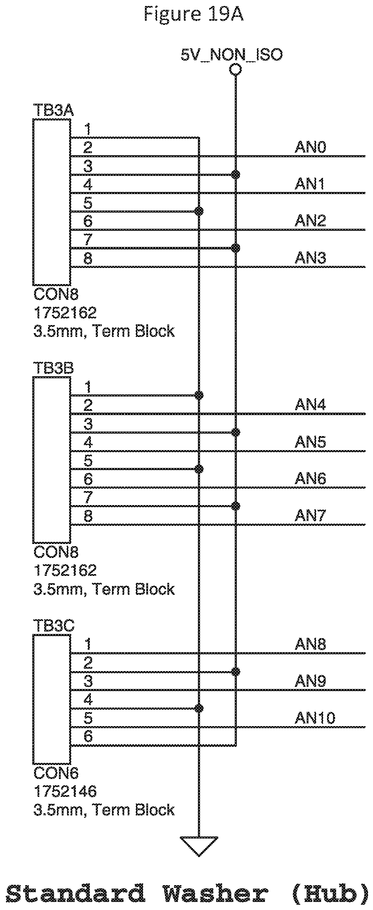

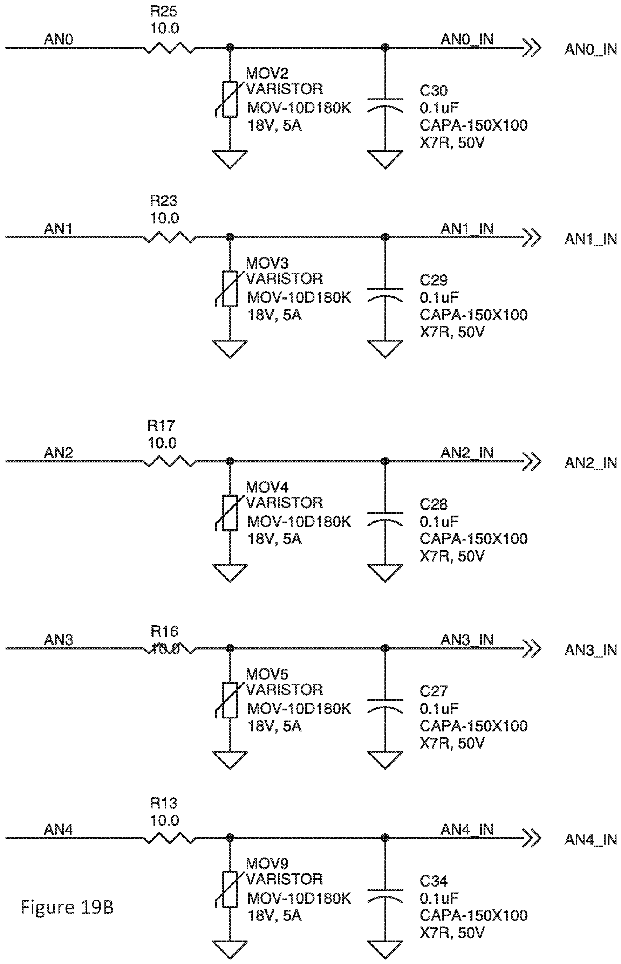

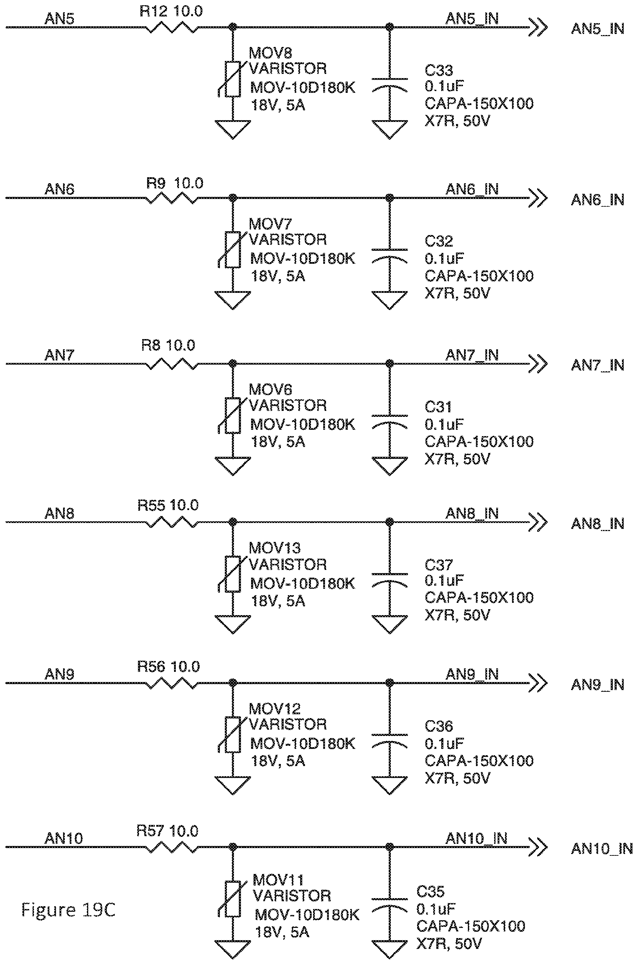

An interface of the data acquisition module 12 is configured to receive signals from the one or more sensors attached to the one or more components of the device and comprises a processor configured to process the signals received from the one or more sensors and generate a data packet containing data indicative of operation of the appliance based on the received signals. In some embodiments, data indicative of the operation of the appliance may be data which indicates an event in a cycle of operation of the appliance. For example, if the appliance is a washing machine, data indicative of operation of the washing machine would include indications of the start or end times of a cycle, door lock and unlock, chemical request signals and drain valve opening or closing. Figures 15 and 16A-C are circuit diagrams of an exemplary embodiment of an interface according to an embodiment of the invention. Figures 10A-B, 17A-E and 19A-C are circuit diagrams of exemplary connections between an interface of a data acquisition module and an appliance according to embodiments of the invention. Figures 11A-C and 12A-C are circuit diagrams of exemplary connections between an interface of a data acquisition module and an array of sensors, via a hub, according to embodiments of the invention. Figures 13 and 18A-C are circuit diagrams of exemplary connections between an interface of a data acquisition module and utility meters according to embodiments of the invention.

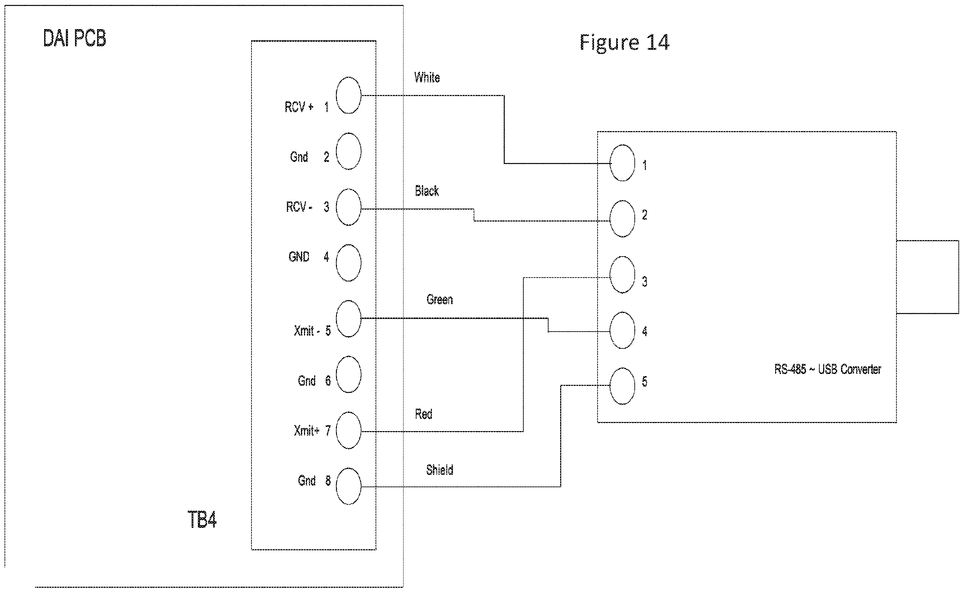

The interface of the data acquisition module 12 further comprises a communications module (not shown) configured to transmit data packets generated by the processor to a local gateway 14. As described in more detail below, local gateway 14 is an example of a data processing module of the invention. The data acquisition module 12 is connected to the local gateway 14 via a wired connection, although this is not essential and the data acquisition device could communicate with the local gateway wirelessly. The local gateway 14 is configured to receive and process the data packets sent by the data acquisition module 12, as described in more detail below. Figure 14 is a circuit diagram of an exemplary connection of an interface of a data acquisition module with a serial to USB converter for attachment of the data acquisition module to a local gateway according to an embodiment of the invention.

The data acquisition module 12 is connected to the local gateway 14 via a wired connection. The local gateway 14 is configured to receive and process the data packets sent by the data acquisition module 12.

The local gateway 14 is configured to receive data from the interface of the data acquisition module 12, the data being indicative of operation of the appliance and based on the signals received by the interface.

The local gateway 14 comprises a memory (not shown) for storing associations between a plurality of classifications and a corresponding plurality of sets of reference data.

The local gateway 14 further comprises a processor (not shown), which is programmed to compare the received data from the interface to the plurality of sets of reference data, identify a match between the received data and one of the sets of reference data and upon identification of a match, determine the classification associated with the matched set of reference data.

The local gateway 14 is configured to transmit information indicative of the operation of the appliance, based on the received data packets from the data acquisition module 12, to a remote server 16, preferably over an internet connection. Typically, the remote server is configured for storage and display of the data to a user connected to the server over the network.

In this embodiment, the local gateway 14 is configured as the data processing module of the appliance monitoring and reporting system 1. However, it is envisaged that in some systems the remote server can be the data processing module.

The interface of the data acquisition module 12 is configured as a 'store and forward' device, which is programmed to receive signals at the at least one input, store the signals in a memory for a period of time, process the signals into a data packet and forward the data packet to local gateway 14. The local gateway 14 is configured to store the received data packet from the interface, process the received data and transmit data indicative of operation of the appliance to a remote server over a network connection (typically an Internet connection). Typically, the remote server is configured for storage and display of the data to a user connected to the server over the network.

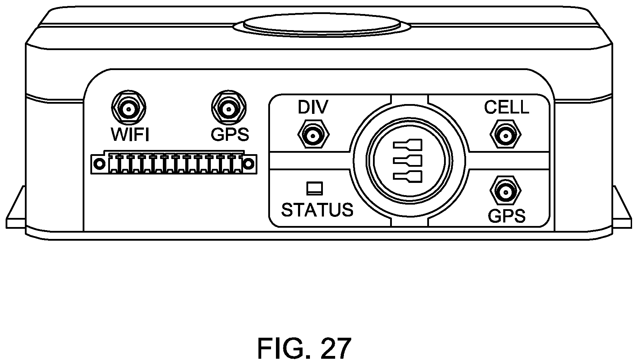

Although the data acquisition module and data processing module have been described in connection with components that are separate from each other and connected using a wired interface (e.g. an interface connected to a local gateway via an interconnecting data cable, and wherein data packets are transmitted between the two), this is not essential. In practice, the data acquisition module and the data processing module may be arranged in any convenient manner. For instance, the data processing module may be housed in a housing which also houses the interface of the data acquisition module. Such a housing would therefore comprises sockets for receiving inputs for the interface (described in more detail below), and would thus be connectable to sensors removably fixed to the appliance, as explained above. In that case, communication between the data processing module and the data acquisition module would of course take place internal to the housing in any convenient manner. An example of such an embodiment in shown in Figure 27.

Although it is envisaged that the present invention can be applicable to any appliance, the invention will be described hereafter specifically in relation to washing machines. Other appliances to which the present invention may usefully be directed include those which are configured to operate in different cycles, such as driers and dishwashers. Armed with the teaching contained herein, a skilled person would be capable of applying the invention to such machines to monitor and report on their operation in a corresponding way to that described below for washing machines.

### A. Washing Machine

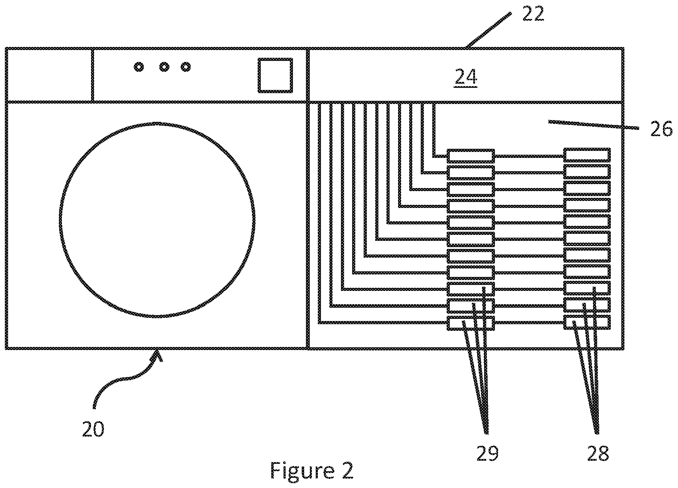

Referring to Figure 2, a washing machine 20 has a controller 22 comprising a processor board 24 connected to an input-output (I/O) board 26. The I/O board 26 comprises eleven outputs 28 connected to components of the washing machine. Each of the outputs 28 of the I/O board 24 includes a switch 29 to isolate the power circuits of the processor board 24 from the circuits of the components of the washing machine 20, which are relatively high power compared to the processor circuits. In use, the I/O board 26 forwards operating signals from the processor board 24 to the components of the washing machine, via the switches 29, to cause the washing machine to carry out various washing machine functions of a washing operation.

A cycle of operation for a washing machine is comprised of a number of steps which are to be performed by different components of the washing machine in sequence. The steps of a cycle of operation are generally chosen based on the type of laundry that is to be washed. Typical examples of cycles of operation include: quick wash, standard wash, light soil (whites), light soil (coloureds), medium soil (whites), medium soil (coloureds), heavy soil (whites), heavy soil (coloureds) and stain soak.

Each step of the stored cycles of operation comprises a number of decisions (or aspects). Examples of the types of decisions that can form part of a step of a cycle of operation include: type of step (i.e. rotate basket forwards, rotate basket backwards, soak (basket stationary), end of formula); time (duration of the step); bath temperature; bath fill level; hot water valve status (open/closed); cold water valve status (open/closed); steam; chemicals (which chemical or mixture of chemicals is required); when to inject chemical; chemical dose (duration of chemical injection); and drain.

The processor board 24 comprises a memory (not shown) storing a database of a plurality of classifications of cycles of operation and associated steps and decisions. The processor board further comprises a communications module (not shown) configured to transmit operating signals, in sequence, to the outputs of the I/O board 26, the signals configured to cause the machine to carry out the steps of a selected cycle of operation.

The washing machine 20 is an industrial grade washing machines, of the type used in commercial operations such as healthcare, hospitality and correctional facilities. As such, the washing machine 20 requires multiple chemicals to be delivered to the bath of the machine during a cycle of operation. There are two main ways in which chemicals can be delivered to the washing machine 20 during a cycle of operation. The washing machine 20 can be connected indirectly to multiple chemical tanks via an automated chemical product dispenser, in which case an output of the washing machine controller 22 is connected to the automated chemical product dispenser. An operating signal sent from the washing machine controller 22 to an automated chemical product dispenser is referred to as a "formula request signal", which is used to indicate the mixture and concentration of chemicals required by the washing machine 20 to the dispenser. Alternatively, the washing machine 20 can be connected directly to multiple chemical tanks, in which case an operating signal of the washing machine controller 22 is provided to a controller of the pump of each chemical tank to control delivery of the chemical from that tank to the washing machine.

It is a realisation of the present invention that a data acquisition module can be used to sense operating signals at an output of an I/O board of a washing machine and determine information indicative of the operation of the washing machine from the operating signal. For example, an operating signal at an output associated with a door unlock solenoid indicates that the processor has signalled for the door of the washing machine to be unlocked. Typical outputs of an I/O board include, amongst others: chemical 1, chemical 2, chemical 3, chemical 4, chemical 5, chemical 6, chemical 7, chemical 8, hot water valve, cold water valve, sewer drain solenoid, flush valve, steam valve, alarm state solenoid, lint filter lock solenoid, door latch solenoid.

It is a further realisation of the present invention that an operating signal of an I/O board can be detected by sensing a switching event of a switch of the I/O board associated with the output. For example, the switches 29 of the I/O board 26 are electromechanical relay switches, each relay having an active state and an inactive state. A switching event of a relay from an inactive state to an active state or vice versa can be sensed by a magnetic field sensor, and in particular a Hall effect sensor, positioned along the axis of the solenoid of the relay. Typical relays of I/O boards include:
a relay, the state of which is indicative of the start of a cycle of operation of the appliance;
a relay, the state of which is indicative of the end of a cycle of operation of the appliance;
a relay, the state of which is indicative of a call for the supply of chemicals from a chemical dispenser;
a relay, the state of which is indicative of the door lock status of the appliance; and
a relay, the state of which is indicative of the drain input status of the appliance.

The number and arrangement of outputs and switches of an I/O board are specific to each I/O board design. Examples of typical I/O boards include: V6J uP produced by Milnor and CXR output board produced by Cissell.

It is a further realisation of the present invention that the operating signals of an I/O board may be used to determine or classify the cycle of operation of the washing machine that has been performed. For example, the duration and sequence of the operating signals of the I/O board can be unique to a particular cycle of operation and can be used by the monitoring and reporting system of the present invention to determine the specific cycle of operation that has been performed by the appliance. Alternatively or additionally, a formula request signal from the controller to an automated chemical product dispenser can be unique to a particular cycle of operation and may be used to determine the specific cycle of operation has been performed.

### B. Monitoring and reporting system

### B1. Data acquisition module

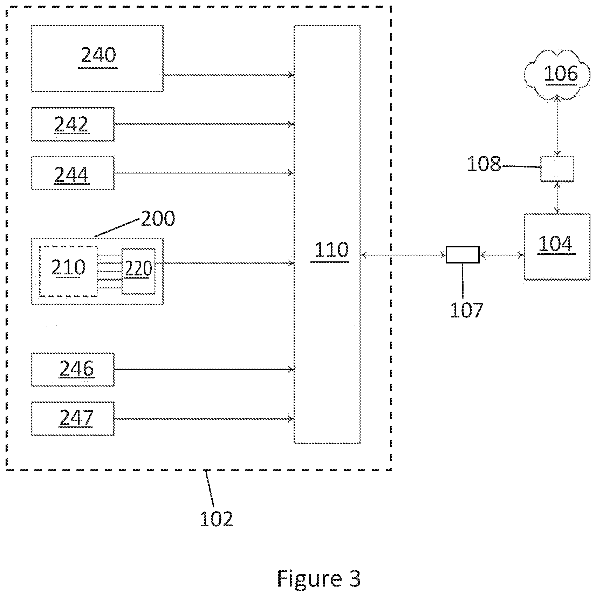

Referring to Figure 3, an exemplary monitoring and reporting system 100, for monitoring the washing machine 20 of Figure 2, comprises a data acquisition module 102, a local gateway 104 and a remote server 106. The data acquisition module 102 is connected to the local gateway 104 via a wired connection. A serial to USB converter 106 is disposed between the data acquisition module 102 and the local gateway 104 to convert a serial output (typically RS-485) from the data acquisition module to USB protocol readable by the local gateway 104. The local gateway 104 is connected to the remote server 106 via a network connection 108.

However, it will be appreciated that the exemplary arrangement described in connection with figure 3 is merely one way to configure the invention. For instance, an interface 110 of the data acquisition module 102 may be housed within a common housing (not shown) together with the data processing module in place of the gateway 104.

The data acquisition module 102 comprises an interface 110 having a plurality of inputs for receiving data from a plurality of sources. The module 102 further comprises a relay state sensor array 200 including an eleven relay state sensors 210. Each relay state sensor 210 is connected to a hub 220 and an output of the hub 220 is connected to an input of the interface 110.

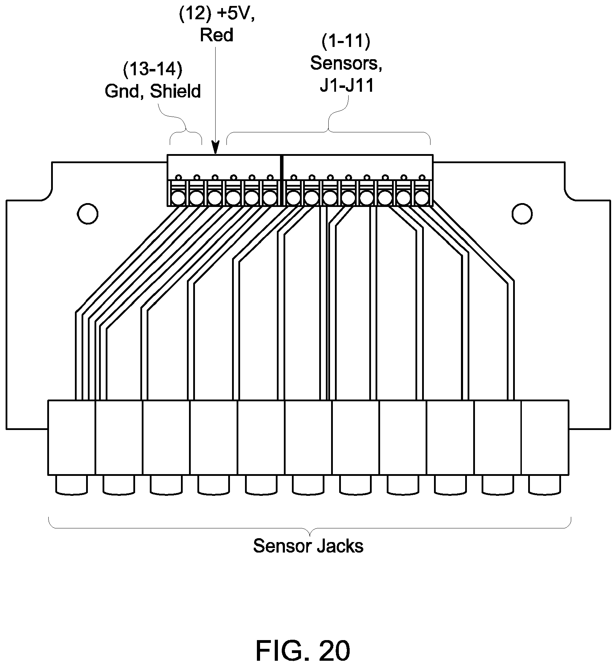

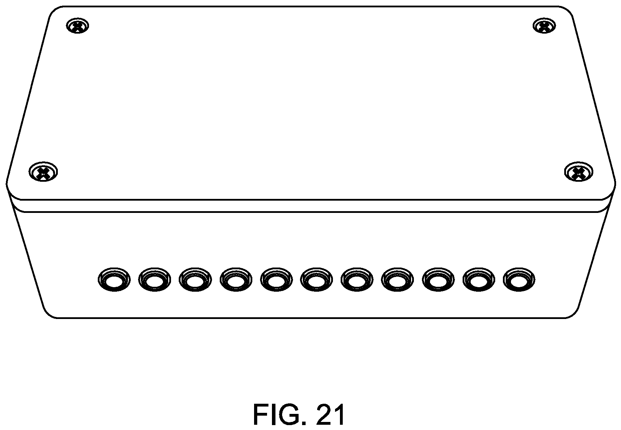

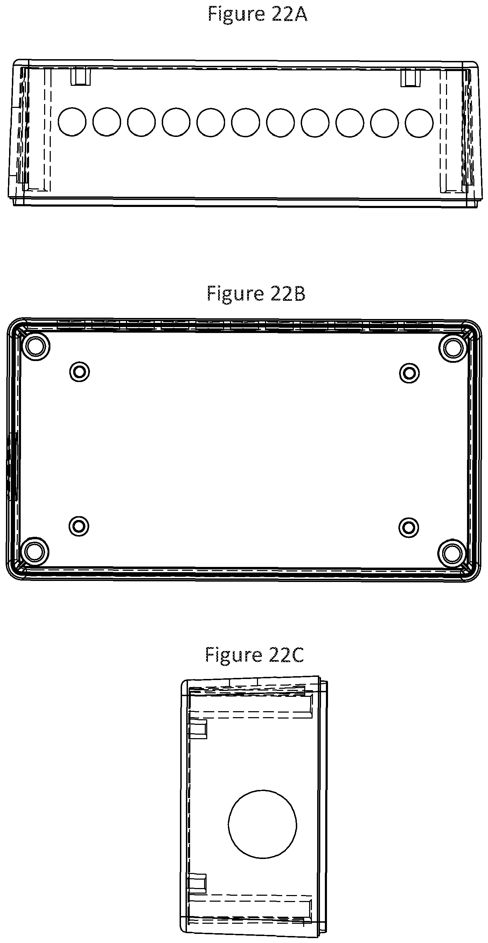

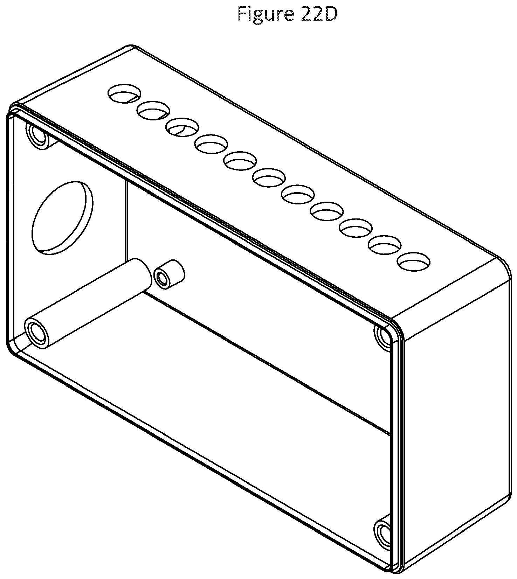

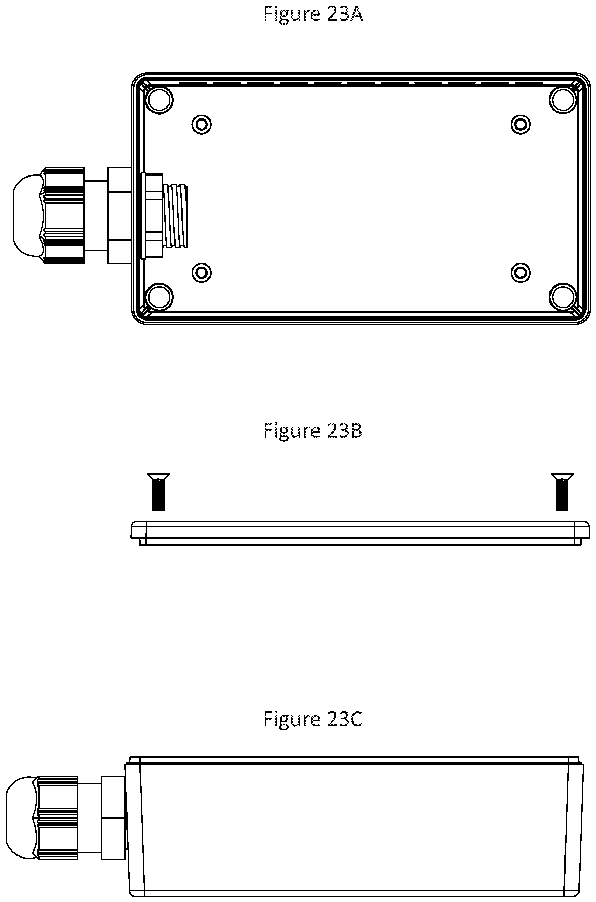

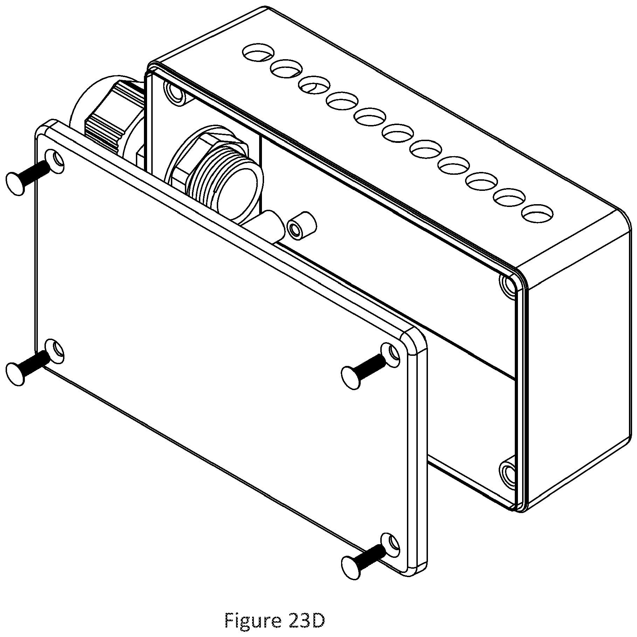

The hub 220 is a passive hub device for connecting output wires from the sensors 210 with respective inputs of the interface 110. The hub 220 comprises a printed circuit board within a housing, the printed circuit board having connectors for receiving outputs of each of the sensors and a terminal block for connection an output of the hub to one or more inputs of the interface. Figure 20 is an image of a printed circuit board of a hub according to an embodiment of the invention. Figures 21, 22A-D and 23A-D are images of housing for the printed circuit board of a hub according to embodiments of the invention.

It will be appreciated that the passive hub 220 may either be housed within the aforementioned common housing together with the data acquisition module and the data processing module, or it may be provided external to such a housing.

The interface 110 also comprises an input for an output 240 of the washing machine 20. Typically the output of the washing machine carries a formula select signal or a formula reset signal intended for an automatic chemical product dispenser.

The interface 110 also comprises inputs for hot and cold water meter outputs 242 and 244 and other utility meter outputs 246, 247. Typically, utility meters, such as water meters, comprise reed switches which provide signals in the form of magnetic pulses generated as a result of the operation of the water meters and which are indicative of the volume of the utility that has been consumed.

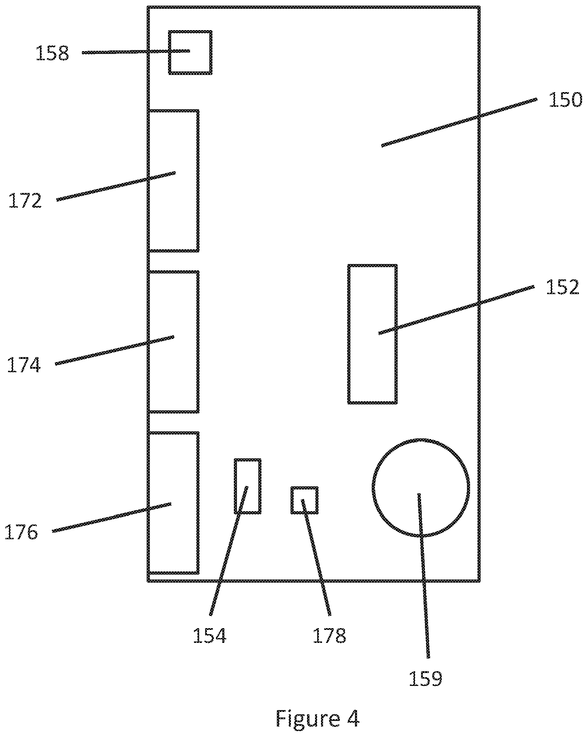

Referring to Figure 4, the interface 110 of Figure 3 comprises a printed circuit board 150.

A microcontroller 152 (an integrated circuit (IC), typically a PIC18F46K222 manufactured by MICROCHIP) is mounted to the printed circuit board 150 and comprises an integrated processor and non-volatile memory. An output of the microcontroller 152 is connected to a communications module 154 (typically an RS-485 transceiver such as a MAX488 manufactured by Maxim) also mounted to the printed circuit board 150.

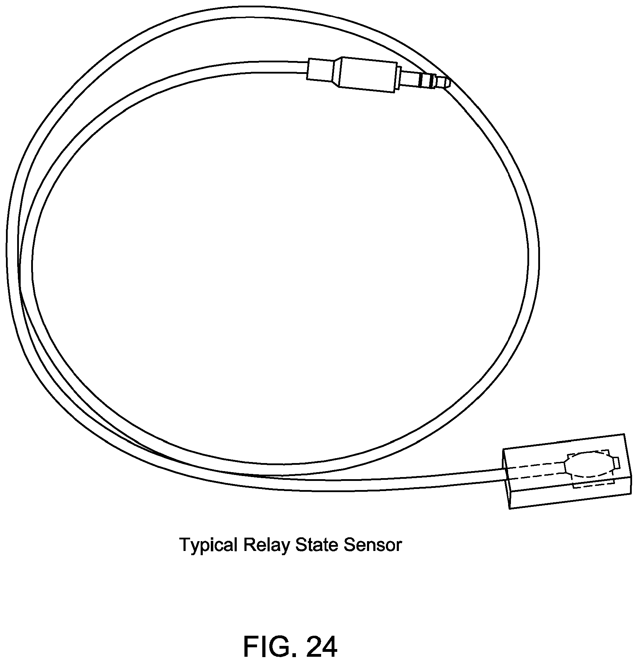

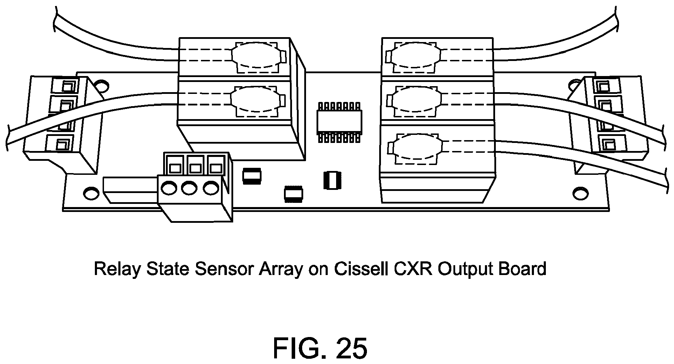

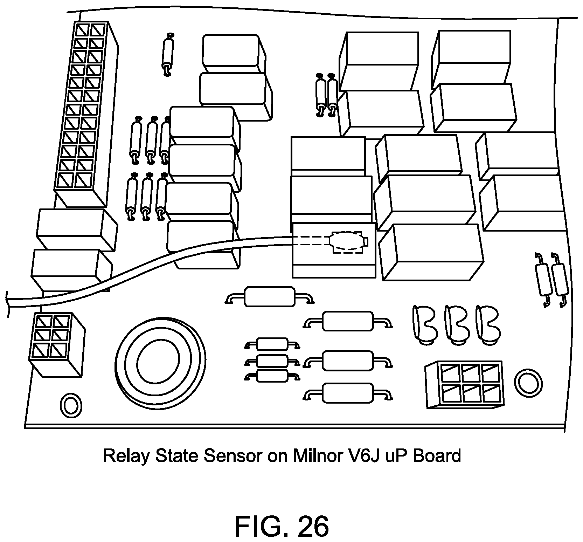

Two groups 172, 174 of terminal blocks are mounted to the printed circuit board 150 and connected to inputs of the microcontroller 152. The first group 172 of terminal blocks is provided for receiving outputs from the relay state sensors 210 of the relay state sensor array 200 and also for providing a 5V DC power supply to the relay state sensors 210. Figures 24, 25 and 26 are images of relay state sensors according to an embodiment of the invention. The second group 174 of terminal blocks is provided for receiving outputs from hot and cold water meters and other utility meters.

A third group 176 of terminal blocks is provided for an output of the communications module 154, to connect an output of the microcontroller to the local gateway 104 via the serial-to-USB converter 107.

A connector 178 is also mounted on the printed circuit board 150 for connection of an output 240 of the washing machine 20. The output 240 of the washing machine is typically a wire carrying a formula select signal to an automated chemical product dispenser, the signal being indicative of a request for chemicals from the washing machine.

A connector socket 158 for a 5V DC external power supply (typically from a mains adapter) is mounted on the printed circuit board 150 to provide power to the microcontroller 152, the communications module 154 and to the relay state sensor array 200. A rechargeable battery 159 is also provided on the printed circuit board 150 to provide back-up power in the event that an external power supply is not available.

In use, the interface 110 receives signals from the various inputs, indicative of aspects of the operation of the washing machine 20, such as chemical request signals, hot/cold water valve operation, sewer drain solenoid activation, flush valve operation, steam valve operation, alarm state solenoid activation, lint filter lock solenoid activation and door latch solenoid activation. The microcontroller 152 of the interface is programmed to determine the start and end of a cycle of operation of the washing machine 20. A start of a cycle of operation of the washing machine 20 is typically determined on receipt of a signal from a sensor monitoring a relay controlling a door latch of the washing machine, but may also be determined based on receipt of signals from relays monitoring any aspect of operation of the washing machine, such as a formula request signal, an alarm state solenoid activation or hot/cold water valve operation. An end of a cycle is typically determined on receipt of an opposite signal from the relay controlling the door latch, but may also be determined based on receipt of signals from any of the relays being monitored by a sensor.

During a cycle of operation, the microcontroller is programmed to store the received data from all of the inputs. In particular, the microcontroller is programmed to store the length (duration) of the received signals and the order in which the signals are received. Once an end of a cycle of operation is determined, the microcontroller is programmed to collate the data received and stored during the cycle into a data packet and is further programmed to transmit the data packet to the local gateway via the communications module 154 and the serial-to-USB converter 107.

The microcontroller 152 is further programmed to send the data received from the utility meters at a different time to the sensor data and washing machine output data. For example, the utility meter data may be stored and sent to the local gateway once per day.

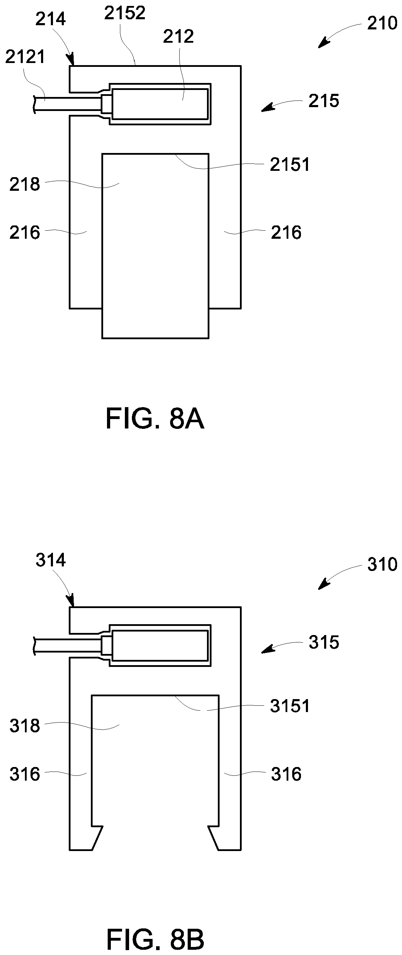

Referring to Figure 8A, a relay state sensor 210 comprises a relay housing 214 having a roof 215 with opposing first and second planar surfaces 2151, 2152 and four opposing walls 216 depending from the first planar surface 2151 of the roof 215.

The four opposing walls 216 and first planar surface 2151 form an open cavity 218 for receiving a relay 29 of the washing machine 20. Relays 29 of the washing machine 20 are substantially cuboid-shaped, having substantially planar upper surface and side walls. The cavity is sized to receive the relay 20 with an interference fit (the distance between the walls 216 of the housing 214 being fractionally less than the width and length of the relay 29 to be received, such that the relay contacts all four opposing walls 216 and is held in place in the cavity 218 by friction.

A magnetic field sensor 212 (typically a Hall effect sensor) is embedded within the second planar surface 2152 of the roof 215. The sensor is oriented within the housing 214 such that it senses changes in magnetic field due to activation and deactivation events of a relay held within the cavity 218. The sensor has a signal cable 2121 extending from the second planar surface and to a hub 220.

Referring to Figure 8B, an alternative relay state sensor 310 comprises a relay housing 314 having two opposing walls 316 depending from a first planar surface 3121 of a roof 315. The opposing walls define a space to receive a relay 29 of the washing machine 20. In this embodiment, the distance between the walls is substantially the same as the width or length of the relay to be received; however, the walls are provided with tabs 319 at their distal ends to be received underneath the relay, such that the relay is held in place between the walls in a "snap fit" arrangement.

Figures 24, 25 and 26 are images of relay state sensors according to a further embodiment of the invention.

Referring to Figures 10A-B, the relay state sensors 210 are arranged in an array either secured on a backing board or connected to neighbouring sensors 210 at the relay housings. The arrangement of sensors is planar and corresponds to the locations of the relays 29 of the I/O board 26 of the washing machine 20.

The arrangement of the sensors 210 in a corresponding pattern to the relays 29 of the I/O board 26 enables quick and easy connection of the sensor array to the I/O board 26. A hub 220 is provided with inputs for connection of up to eleven relay state sensor outputs 2121 and a terminal block (not shown) for output of the relay state sensor signals to the interface 110 via a wired connection. The hub also comprises an input for a 5V power supply from the interface 100 for powering of the magnetic field sensors 212.

Various modifications will be apparent to those skilled in the art. For example, it is envisaged that the one or more sensors can include one or more voltage sensors, and the components of the appliance include one or more signal cables configured to pass a signal generated either by the appliance or by a utility meter. The one or more the voltage sensors can include one or more split core or solid core current transformers, each disposed in a housing configured to surround the respective signal cable of the one or more signal cables.

Any number of sensors may be provided and any arrangement of sensors may be provided. The sensors may be exclusively magnetic field sensors or exclusively voltage sensors or alternatively the sensors may be a mixture of magnetic field sensors and voltage sensors. Alternative or additional sensors may also be provided to monitor other components of an appliance.

The interface may be provided with any number of inputs and the processor of the interface may be configured to forward the data received from the inputs without storing.

### B2. Data processing module

Referring back to Figure 3, the local gateway 104 (a laptop in this embodiment), or the common housing described above contains a data processing module of the appliance monitoring and reporting system 100. The local gateway 104 comprises a non-volatile memory (not shown) storing a database of operating cycle classifications, each of which is associated with a unique set of reference data.

The stored classifications of operating cycles include: quick wash, standard wash, light soil (whites), light soil (coloureds), medium soil (whites), medium soil (coloureds), heavy soil (whites), heavy soil (coloureds) and stain soak.

A set of reference data refers to one or more pieces of information which are unique to a classification. For instance, these could be a unique pattern or sequence of values (or aspects) indicative of the signal or signals received at the inputs of the interface for the associated cycle of operation. In one example, the reference data can comprise a unique pattern of values corresponding to relay state indication signals from sensors attached to relays of the appliance. Typically, the unique patterns consist of expected durations and/or sequences of signals received at the inputs of the interface. Alternatively or additionally, a set of reference data can be comprised of a single unique value (or aspect), typically indicative of the duration of a single signal received at an input of the interface for a specific cycle of operation. In one example the reference data can comprise a single unique value indicative of a formula request signal of the washing machine.

The tables below show exemplary sets of reference data corresponding to exemplary classifications:

**Table 1 - shows an example set of reference data for a hot wash cycle of operation classification of a washing machine, the set of reference data comprising the expected sequence and duration of signals to be received at the interface from the sensors during operation of a hot wash cycle by the washing machine.**

| | Door latch relay | Hot water valve relay | Cold water valve relay | Chemical 1 injection relay | Chemical 2 injection relay | Drain valve relay | Formula request relay |
|---|---|---|---|---|---|---|---|
| Step 1 | On for 3 secs | - | - | - | - | - | - |
| Step 2 | - | On for 4 secs | - | On for 2 secs | On for 2 secs | - | - |
| Step 3 | - | - | - | - | - | On for 3 secs | - |
| Step 4 | On for 3 secs | - | - | - | - | - | - |

**Table 2 - shows an example set of reference data for a cold wash cycle of operation classification of a washing machine, the set of reference data comprising the expected sequence and duration of signals to be received at the interface from the sensors during operation of a cold wash cycle by the washing machine.**

| | Door latch relay | Hot water valve relay | Cold water valve relay | Chemical 1 injection relay | Chemical 2 injection relay | Drain valve relay | Formula request relay |
|---|---|---|---|---|---|---|---|
| Step 1 | On for 3 secs | - | - | - | - | - | - |
| Step 2 | - | - | On for 4 secs | On for 2 secs | - | - | - |
| Step 3 | - | - | - | - | On for 2 secs | | - |
| Step 4 | | - | - | - | - | On for 3 secs | |
| Step 4 | On for 3 secs | | | | | | - |

**Table 3 - shows an example database of operating cycle classifications and sets of reference data stored for a washing machine connected to an automated chemical product dispenser, wherein the duration of the formula request signal is unique to each operating cycle classification.**

| | Door latch relay | Hot water valve relay | Cold water valve relay | Chemical 1 injection relay | Chemical 2 injection relay | Drain valve relay | Formula request relay |
|---|---|---|---|---|---|---|---|
| Hot wash | - | - | - | - | - | - | On for 6 seconds |
| Cold wash | - | - | - | - | - | - | On for 5 seconds |
| Soak | - | - | - | - | - | - | On for 4 seconds |
| Rinse | - | - | - | - | - | - | On for 3 seconds |

The local gateway 104 further comprises a communications module configured to receive data packets from the interface 110 of the data acquisition module 102 and a processor configured to compare the received information to the plurality of sets of reference data and identify a match between the received data and one of the sets of reference data. Where a common housing is provided in place of a local gateway 104, the data acquisition module and data processing module may communication by any convenient means internal to the housing.

Upon identification of a match between the received data and one of the sets of reference data, the processor is configured to determine the classification of cycle of operation that the washing machine performed based on the associations between the stored classifications and the sets of reference data.

In the absence of a match between the received data and one of the sets of reference data, the processor is configured to identify the closest set of reference data to the received data and to determine one of the following outcomes.

If all values or aspects of the received data are within a pre-determined tolerance of the corresponding values or aspects of the closest set of reference data (for example, the values of the received data are within 5 or 10 per cent of the corresponding values of the closest set of reference data), the processor is configured to determine that the classification associated with the closest set of reference data is the classification of the cycle of operation of the washing machine. For instance, with reference to table 1 above, the processor can be configured with a pre-determined tolerance range of 0.5 seconds either side of a reference value. Therefore, for example, when the processor compares the hot water relay value of 4 seconds at step 2 of the set of reference data with the value of a signal received from the hot water relay sensor at the appropriate point in the sequence of the received data, the processor can be configured to identify a match of hot water relay signal with the reference data value if the received hot water relay signal value is between 3.5 and 4.5. The processor can be further configured to determine a match of a hot wash operating cycle classification if all of the aspects of the received data match with the corresponding aspects of the hot wash set of reference data.

If some or all values or aspects of the received data are outside of a pre-determined tolerance of the corresponding values or aspects of the closest set of reference data, the processor may determine that the machine is operating in accordance with a cycle of operation, the details of which are not stored in the memory. Accordingly, the processor may be configured to create and store a new entry in its database pertaining to the newly received data such that it can recognise the cycle of operation in the future. The entry comprises:
a new classification (such as a unique name/identifier of the cycle of operation);
a new set of reference data corresponding to the received information (such as a unique set of reference data including information such as values indicating the duration and sequence of relay state signals from the sensors for the cycle of operation); and
an association between the new classification and the new set of reference data.

For example, if the processor does not identify a match between the duration and sequence of signals received from the sensors to any stored sets of reference data, the processor can be configured to store the duration and sequence of the received data as a new set of reference data and assign the new set of reference a unique name, such as unknown 1.

The local gateway or common housing comprising the data processing module can also be configured for a user to update the classification names associated with stored sets of reference data (for example to "cold wash"). In this case, the classification may be changed by accessing the database of classification names and reference data stored on the memory of the local gateway or common housing comprising the data processing module. The local gateway or common housing comprising the data processing module may also be configured for a user to manually update other stored values such as pre-determined tolerances and aspects of the sets of reference data.

If one or more specific values or aspects of the received data (for example, an indication of the state of one particular relay of the washing machine) is outside of a pre-determined tolerance of the corresponding value or aspect of the closest set of reference data, but all other aspects of the received data are within the pre-determined tolerance, the processor may determine that an error has occurred. For instance, the processor may determine that the machine is operating according to the closest identified cycle of operation but that an error occurred during the cycle of operation, the error being associated with the aspect of the cycle of operation associated with the value or aspect that was outside of the pre-determined tolerance.

For instance, again with reference to table 1 above, the processor can be configured with a pre-determined tolerance range of 0.5 seconds either side of a reference value. Therefore, for example, if the processor compares the drain valve relay value of 3 seconds at step 3 of the set of reference data with the value of a signal received from the drain valve relay sensor at the appropriate point in the sequence of the received data, the processor can be configured to identify that a match has not occurred if the received value is outside of the range of 2.5 and 3.5 seconds, or was not received at all. However, the processor can still be configured to identify a match with the hot wash operating cycle if all of the other aspects of the received data are within the pre-determined tolerances of the corresponding aspects of the hot wash set of reference data. In this case, the processor can be configured to determine that a fault occurred in operation of the drain valve during the hot wash operating cycle.

Further details of the error may be sent to a third party for processing, either by the processor of the local gateway forwarding an indication of the error to the remote server or by the local gateway or the remote server forwarding the indication directly to a third party server.

### C. Examples

### C1. Example 1

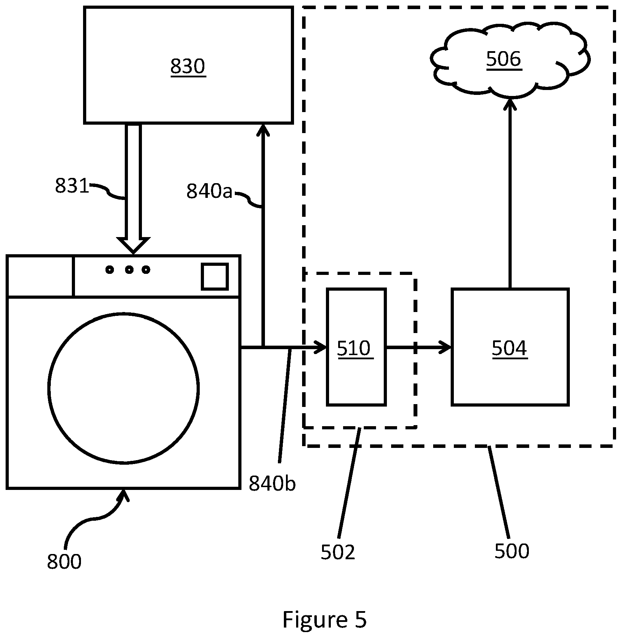

Referring to Figure 5, a washing machine 800 comprises a controller (not shown) having a memory storing a database of operating cycle classifications and an associated sequence of steps. The controller also comprises a processor configured to transmit signals indicative of the sequence of steps for a selected operating cycle to outputs of the controller. Each operating cycle classification stored in the controller of the washing machine 800 has an associated step comprising issuing a unique formula request signal to an automated chemical product dispenser 830.

A monitoring and reporting system 500 is provided for monitoring a washing machine 800. The system 500 includes a data acquisition module 502 comprising an interface 510. The interface 510 is provided with an input for receiving an output of the controller of the washing machine 800.

The system 500 further includes a local gateway 504, connected to an output of the interface 510 for receiving data packets from the interface 510, and a remote server 506, connected via a network connection to the local gateway for receiving data packets from the local gateway 506. The local gateway 504 comprises a memory storing a database of operating cycle classifications and an associated reference value indicative of a formula request signal of the washing machine 800, typically the duration of the formula request signal. The local gateway 504 further comprises a processor configured to process data packets from the interface 510 and compare the data packets to the associated reference values.

An output 840 of the controller of the washing machine 800 is configured to transmit formula request signals to the automated chemical product dispenser 830. The output 840 is received at an input of the automated chemical product dispenser 830. An indication of the output signal 840 is received at an input of the interface 510 of the monitoring and reporting system 500. The output 840 may be sensed or received by the monitoring and reporting system 500, for example by a voltage sensor removably attached to the output 840 of the washing machine or by a tail of the output being connected to an input of the interface.

During a cycle of operation of the washing machine 800, the controller of the washing machine is programmed to send a formula request signal to the automated chemical product dispenser 830, via the output 840 and 840a. Each formula request signal is a pulse having a unique duration, which is also unique to each operating cycle classification of the washing machine.

An indication of the formula request signal is also received at an interface 510 of the system 500, typically the indication comprises information on the duration of the signal. The interface 510 is configured to process the received signal into a data packet and to transmit the data packet to a local gateway 504 of the system 500. The data packet includes information indicative of the formula request signal, typically the duration of the signal.

On receipt of a data packet from the interface 510, the local gateway 504 is programmed to compare the information indicative of the formula request signal comprised in the data packet to the reference values stored in the memory. Since each formula request signal is unique to a cycle of operation of the washing machine 800, the monitoring system 500 is able to identify the cycle of operation by identifying the formula request signal.

On identification of a match between the received information and a reference value, the local gateway is configured to determine that the operating cycle classification associated with the matched reference value is the operating cycle classification that has been performed by the washing machine 800.

If no match is identified, the local gateway 504 is configured to determine that the operating cycle that has been performed is unknown.

The local gateway 504 is further configured to process the outcome of the determination into a data packet and to transmit the data packet to the remote server 506, over the network connection.

### C2. Example 2

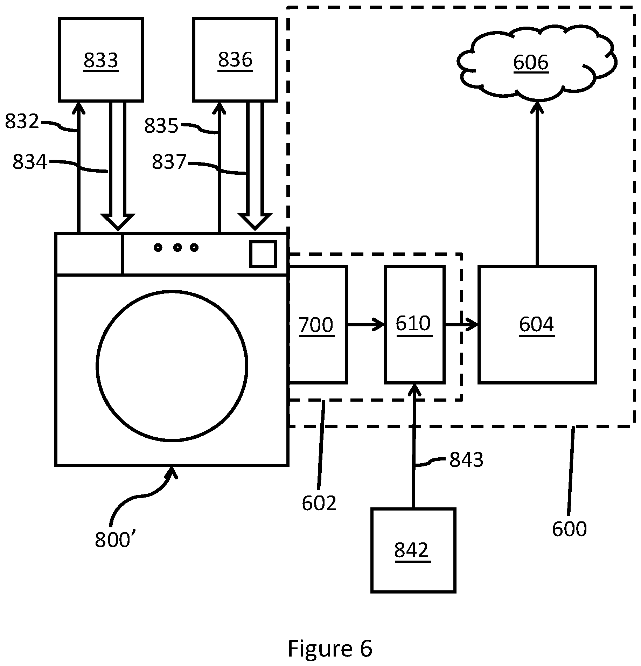

Referring to Figure 6, a washing machine 800' comprises a controller (not shown) having a memory storing a database of operating cycle classifications and an associated sequence of steps. The controller also comprises a processor configured to transmit signals indicative of the sequence of steps for a selected operating cycle to outputs of the controller. Each output of the washing machine also comprises an electromechanical relay configured to switch between an inactive and an active state on receiving an output signal from the processor.

A first output 832 of the controller of the washing machine 800' is connected to a pump of a first chemical tank 833, containing a first chemical. A second output 835 is connected to a pump of a second chemical tank 836, containing a second chemical. Examples of the type of chemicals used in industrial grade washing machines include: alkali, detergent, bleach, softener, sour and starch. During a cycle of operation, the controller of the washing machine 800' is programmed to transmit signals at one or more steps of the cycle to the pumps of the tanks 833, 836 for supply 834, 837 of the first and second chemicals to a bath of the washing machine 800'.

A monitoring and reporting system 600 is provided for monitoring a washing machine 800'. The system 600 includes a data acquisition module 602 comprising an interface 610 and an array 700 of three sensors. The interface 610 is provided with three inputs for receiving outputs from the three sensors.

The array 700 of sensors is removably attached to the controller of the washing machine 800', whereby each of the three sensors is arranged directly above a relay of an output of the controller. A sensor is arranged above a relay of an output to a door latch circuit of the washing machine 800', a relay of the output 832 to the first chemical tank pump and a relay of the output 835 to the second chemical tank pump.

The system 600 further includes a local gateway 604, connected to an output of the interface 610 for receiving data packets from the interface 610, and a remote server 606, connected via a network connection to the local gateway for receiving data packets from the local gateway 606. The local gateway 604 comprises a memory storing a database of operating cycle classifications and an associated reference values indicative of aspects of a cycle of operation of the washing machine 800', typically the sequence and duration of activation signals of the relays. The local gateway 604 further comprises a processor configured to process data packets from the interface 610 and compare the data packets to the reference values.

During a cycle of operation of the washing machine 800', the controller of the washing machine is programmed issue a door latch signal at a first step of a cycle, to trigger operation of the first pump 833 at least at one subsequent step in the cycle via output 832, to trigger operation of the pump 836 at least at one different subsequent step in the cycle via output 835, and to issue a door latch signal at a final step of a cycle. Each cycle of operation is comprised of a unique sequence of these steps.

The interface 610 is programmed to determine a start of a cycle of operation on receiving a signal from the sensor indicating activation of the door latch of the washing machine.

On determination of the start of a cycle of operation, the interface 610 is further programmed to store the duration and sequence of signals from the sensors until an end of cycle of operation is determined, when a second signal from the sensor indicating activation of the door latch of the washing machine is received.

Once an end of a cycle of operation is determined, the interface 610 is configured to process the received signal data into a data packet comprising information relating to the duration and sequence of the received signals, and transmit the data packet to a local gateway 604 of the system 600. For instance, with reference to table 2 above, the duration and sequence of the received signals may be: door latch relay on for 3 seconds, cold water valve relay on for 4 seconds, chemical 1 injection relay on for 2 seconds, chemical 2 injection relay on for 2 seconds, drain valve relay on for 3 seconds and door latch relay on for 3 seconds.

On receipt of a data packet from the interface 510, the local gateway 504 is programmed to compare the information indicative of the formula request signal comprised in the data packet to the reference values stored in the memory. Since each formula request signal is unique to a cycle of operation of the washing machine 800, by identifying the formula request signal, the monitoring system 500 is able to identify the cycle of operation.

On identification of a match of the received information with a reference value, the local gateway is configured to determine that the operating cycle classification associated with the matched reference value is the operating cycle classification that has been performed by the washing machine 800.

If no match is identified, the processor is configured to determine that the operating cycle that has been performed is unknown.

The local gateway 604 is further configured to process the result of the determination into a data packet and to transmit the data packet to the remote server 606, over the network connection.

The interface 610 is also provided with inputs for receiving outputs of utility meters.

In this embodiment, an output 843 of a water meter 842 is connected to an input of the interface 610. The water meter transmits pulses through the output 843, each pulse being indicative of a volume of water that has passed through the water meter. The interface 610 is programmed to process and store information from the signals received from the water meter 842, the information being indicative of a volume of water that has been used. The interface 610 is further programmed to transmit data packets comprising the stored information to the local gateway 604 at a single time of day, typically midnight or in the early hours of the morning.

The local gateway is configured to forward data packets received from the interface including information indicative of operation of the water meter to the remote server 606 without further processing.

### C3. Variants

Various modifications will be apparent to those skilled in the art. For example, it is envisaged that the data processing module can be located in the same device as the interface, and perhaps in a separate software layer in a processor of the interface. However, preferably the processing means is provided in the local gateway or in the remote server or a combination of the local gateway and the remote server.

It is envisaged that the one or more sensors can include one or more voltage sensors, and the components of the appliance include one or more signal cables configured to pass a signal generated either by the appliance or by a utility meter. The one or more the voltage sensors can include one or more split core or solid core current transformers, each disposed in a housing configured to surround the respective signal cable of the one or more signal cables.

Any number of sensors may be provided and any arrangement of sensors may be provided. The sensors may be exclusively magnetic field sensors or exclusively voltage sensors or alternatively the sensors may be a mixture of magnetic field sensors and voltage sensors. Alternative or additional sensors may also be provided to monitor other components of an appliance.

The interface may be provided with any number of inputs and the processor of the interface may be configured to forward the data received from the inputs without storing.

It is envisaged that a formula request signal may be sensed by a sensor, rather than received directly at an input of the interface.

It is also envisaged that the processing means can be configured to determine errors in cycles of operation based on comparisons of with previously determined outcomes of the processing module. The outcomes of all comparisons may be stored by the processing module and compared with the outcome of a current comparison. The comparison with historic data can be used to determine failures in components of the washing machine if an error in an aspect of a cycle of operation occurs multiple times. For example, if a signal indicating operation of a drain valve of a washing machine is not received at an expected point in a sequence of a determined cycle of operation, the processor can be configured to determine that an error has occurred during the determined cycle of operation. The processor can be configured to compare the determined cycle and error indications with previously stored values. If the same error is deemed have occurred on successive iterations of the cycle of operation, the processor can be configured to determine that a failure of a component (such as the drain valve) of the washing machine has occurred.

A formula request signal may not be sufficient to classify a cycle of operation if each formula request signal is not unique to a cycle of operation. Further signals, such as from sensors attached to the washing machine may be required to determine a classification of a cycle of operation.

Signals from utility meters can be sent for each cycle of operation, rather than at set times of day.

The skilled person will be capable of modifying the exemplary embodiments to implement the inventive aspects described herein in various ways depending on circumstances. It is intended that the scope of the present invention is defined by the following claims.

## Claims

1. An appliance monitoring and reporting system (1, 100) for monitoring an appliance (10) configured to operate according to a plurality of cycles of operation, each cycle denoted by a classification, wherein the appliance includes one or more relays configured to control the operation of the appliance, each relay having an active state and an inactive state, the monitoring system comprising:
a data acquisition module (12, 102) configured to sense or receive from the appliance signals indicative of the operation of the appliance, the data acquisition module comprising:
one or more sensors (210) for sensing the state of a relay of the appliance; and
one or more sensor inputs, each configured to receive a signal from a corresponding one of the one or more sensors;
wherein the data acquisition module is configured to generate a data packet containing data indicative of the operation of the appliance based on the sensed or received signals; and
a data processing module (14, 104) configured to receive and process information indicative of the operation of the appliance, the received information based on the data contained in the data packet, the data processing module comprising:
a memory for storing associations between a plurality of classifications and a corresponding plurality of sets of reference data, wherein the plurality of sets of reference data comprises a plurality of unique state patterns of the one or more relays; and
a processor configured to:
compare the received information to the plurality of sets of reference data;
identify a match between the received information and one of the sets of reference data; and
upon identification of a match, determine the classification associated with the matched set of reference data.

2. The system of claim 1, wherein at least part of the data acquisition module is removably attachable to the appliance, and preferably wherein each of the one or more sensors is removably attachable to the respective component of the appliance.

3. The system of any preceding claim, wherein the data acquisition module further comprises one or more appliance inputs, each configured to receive a signal generated by the appliance, and/or one or more utility meter inputs, each configured to receive a signal generated by a utility meter.

4. The system of claim 3, wherein the signal generated by the appliance is a utility supply signal for controlling the supply of a utility from a utility source separate from the appliance, and preferably wherein the plurality of sets of reference data comprises data pertaining to a plurality of unique utility supply signals.

5. The system of claim 4, wherein the appliance is a washing machine, the utility source is a chemical dispenser, and the utility supply signal is a chemical pump signal for controlling the supply of chemicals from the chemical dispenser, wherein the chemical pump signal is preferably one of a formula select signal and a formula reset signal.

6. The system of any one of claims 2 to 4, wherein the utility meter is one of:
a water meter and the signal generated by the water meter is indicative of the volume of cold water and/or hot water supplied to the appliance, and wherein the plurality of sets of reference data comprises a plurality of unique indications of the volume of cold water and/or hot water supplied to the appliance; or
an electricity meter and the signal generated by the electricity meter is indicative of the electrical energy supplied to the appliance, and wherein the plurality of sets of reference data comprises a plurality of unique indications of the electrical energy supplied to the appliance.

7. The system of claim 1, wherein each of the plurality of unique state patterns of the one or more relays includes information on the duration for which each of the one or more relays is in the active state and/or the inactive state, and the order in which each of the one or more relays switches between the active and inactive states.

8. The system of claim 1 or claim 7, wherein the one or more relays configured to control the operation of the appliance include one or more of the following:
a relay, the state of which is indicative of the start of a cycle of operation of the appliance;
a relay, the state of which is indicative of the end of a cycle of operation of the appliance;
a relay, the state of which is indicative of a call for the supply of a utility from a utility source separate from the appliance, preferably a call for the supply of chemicals from a chemical dispenser;
a relay, the state of which is indicative of the door lock status of the appliance;
a relay, the state of which is indicative of the alarm status of the appliance;
a relay, the state of which is indicative of the lint filter lock status of the appliance; and
a relay, the state of which is indicative of the drain input status of the appliance.

9. The system of any preceding claim, wherein in the absence of a match between the received information and one of the sets of reference data, the processor is configured to determine that an error has occurred, and/or identify the set of reference data that is closest to the received information and determine the classification associated with the closest set of reference data, and preferably to store in the memory:
a new classification;
a new set of reference data corresponding to the received information; and
an association between the new classification and the new set of reference data.

10. The system of any preceding claim, wherein the data processing module is located on a remote server (16); and the system further comprises a local gateway communicatively coupled to the data acquisition module and the data processing module;
wherein the data acquisition module is configured to transmit the data packet to the local gateway; and
the local gateway is configured to receive and process data packets sent by the data acquisition module, and transmit information indicative of the operation of the appliance to the remote server, said information based on the received data packets.

11. The system of any one of claims 1 to 9, wherein the data processing module and at least part of the data acquisition module are located within a common housing.

12. The system of claim 11, when dependent on claims 1 to 9, wherein the one or more sensor inputs, appliance inputs and/or utility meter inputs comprise one or more ports in the common housing.

13. A method of monitoring an appliance (10) configured to operate according to a plurality of cycles of operation, each cycle denoted by a classification, wherein the appliance includes one or more relays configured to control the operation of the appliance, each relay having an active state and an inactive state, the method comprising:
sensing or receiving, by a data acquisition module (12, 102), signals from the appliance indicative of the operation of the appliance, wherein the step of sensing signals from the appliance comprises sensing the state of a relay of the appliance;
sending information indicative of the operation of the appliance to a data processing module (14, 104), the information based on the signals sensed or received by the data acquisition module;
comparing, by the data processing module, the information indicative of the operation of the appliance with a plurality of sets of reference data stored in a memory, wherein the plurality of sets of reference data comprises a plurality of unique state patterns of the one or more relays;
identifying a match between the information and one of the sets of reference data; and
determining the classification associated with the matched set of reference data.

14. The method of claim 13, wherein the method further comprises attaching one or more sensors to a component of the appliance and the sensing comprises sensing the state of the one or more components of the appliance at the sensors.

15. The method of claims 13 or claim 14, wherein the receiving comprises receiving one or more signals generated by the appliance, and/or receiving, by the data acquisition module, a signal generated by one or more utility meters.

16. The method of any one of claims 13 to 15, wherein the signal generated by the appliance is a utility supply signal for controlling the supply of a utility from a utility source separate from the appliance and preferably wherein the plurality of sets of reference data comprises data pertaining to a plurality of unique utility supply signals.

17. The method of any one of claims 13 to 16, wherein the appliance is a washing machine (20), the utility source is a chemical dispenser, and the utility supply signal is a chemical pump signal for controlling the supply of chemicals from the chemical dispenser, wherein the chemical pump signal is preferably one of a formula select signal and a formula reset signal.

18. The method of any one of claims 13 to 17, wherein the utility meter is one of:
a water meter and the signal generated by the water meter is indicative of the volume of cold water and/or hot water supplied to the appliance, and wherein the plurality of sets of reference data comprises a plurality of unique indications of the volume of cold water and/or hot water supplied to the appliance; or
an electricity meter and the signal generated by the electricity meter is indicative of the electrical energy supplied to the appliance, and wherein the plurality of sets of reference data comprises a plurality of unique indications of the electrical energy supplied to the appliance.

19. The method of any one of claims 13 to 18, wherein each of the plurality of unique state patterns of the one or more relays includes information on the duration for which each of the one or more relays is in the active state and/or the inactive state, and the order in which each of the one or more relays switches between the active and inactive states.

20. The method of any one of claims 13 to 19, wherein the one or more relays configured to control the operation of the appliance include one or more of the following:
a relay, the state of which is indicative of the start of a cycle of operation of the appliance;
a relay, the state of which is indicative of the end of a cycle of operation of the appliance;
a relay, the state of which is indicative of a call for the supply of a utility from a utility source separate from the appliance, preferably a call for the supply of chemicals from a chemical dispenser;
a relay, the state of which is indicative of the door lock status of the appliance;
a relay, the state of which is indicative of the alarm status of the appliance;
a relay, the state of which is indicative of the lint filter lock status of the appliance; and
a relay, the state of which is indicative of the drain input status of the appliance.

21. The method of any one of claims 13 to 20, wherein, in the absence of a match between the received information and one of the sets of reference data the method further comprises the steps of:
determining that an error has occurred; and/or
identifying the set of reference data that is closest to the received information; and
determining the classification associated with the closest set of reference data, and preferably further comprises the step of storing in the memory:
a new classification;
a new set of reference data corresponding to the received information; and
an association between the new classification and the new set of reference data.

22. The method of any one of claims 13 to 21, wherein the data processing module is located on a remote server and a local gateway is communicatively coupled to the data acquisition module and the data processing module and wherein the method further comprises:
generating a data packet by the data acquisition module, the data packet containing data indicative of the operation of the appliance based on the sensed or received signals;
transmitting the data packet from the data acquisition module to the local gateway;
receiving the data packet at the local gateway;
processing the data packet at the local gateway; and
transmitting information indicative of the operation of the appliance to the remote server, said information being based on the received data packets.

23. The method of any one of claims 13 to 21, wherein the data processing module and at least part of the data acquisition module are located within a common housing, the data processing module communicatively coupled to a remote server external to the common housing, and wherein the method further comprises:
handling the sensed or received signals at the data acquisition module in the common housing;
sending the sensed or received signals from the data acquisition module to the data processing module in the common housing;
receiving the signals at the data processing module;
processing the data packet at the data processing module; and
transmitting information indicative of the operation of the appliance to the remote server, said information being based on the sensed or received signals.

24. A data acquisition module (12, 102) for use in an appliance monitoring and reporting system as claimed in any one of claims 1 to 12, the data acquisition module being configured to sense or receive from the appliance signals indicative of the operation of the appliance, and comprising:
one or more sensors for sensing the state of a relay of the appliance; and
one or more sensor inputs, each configured to receive a signal from a corresponding one of the one or more sensors;
wherein the data acquisition module is configured to generate a data packet containing data indicative of the operation of the appliance based on the sensed or received signals.

25. A data processing module (14, 104) configured to receive and process information indicative of the operation of an appliance (10), wherein the appliance includes one or more relays configured to control operation of the appliance, each relay having an active state and an inactive state, wherein the received information is based on sensed or received signals from the appliance, including signals indicative of the state of one or more of the relays, the data processing module comprising:
a memory for storing associations between a plurality of classifications and a corresponding plurality of sets of reference data, wherein the plurality of sets of reference data comprises a plurality of unique state patterns of one or more relays of the appliance; and
a processor configured to:
compare the received information to the plurality of sets of reference data;
identify a match between the received information and one of the sets of reference data; and
upon identification of a match, determine the classification associated with the matched set of reference data.

26. A data acquisition device (12, 102) for monitoring an appliance, the appliance comprising one or more relays configured to control the operation of the appliance, each relay having an active state and an inactive state, the device being removably attachable to the appliance and comprising:
one or more sensors, each sensor being removably attachable to a relay of the appliance for sensing a state of that relay;
an interface configured, when the apparatus is attached to the appliance, to receive, process and transmit data indicative of the operation of the appliance, the interface including:
one or more sensor inputs, each configured to receive a signal from a corresponding one of the one or more sensors;
a processor configured to process the signals received from the one or more sensors and generate a data packet containing data indicative of the operation of the appliance based on the received signals; and
a communications module configured to transmit the data packet generated by the processor to a local gateway or remote server.

27. The device of claim 26, wherein the interface further includes:
one or more appliance inputs, each configured to receive a signal generated by the appliance, and wherein the processor is further configured to process the signals generated by the appliance; and/or
one or more utility meter inputs, each configured to receive a signal generated by a utility meter, and wherein the processor is further configured to process the signals generated by the utility meter.

28. The device of claims 26 or claim 27, wherein the one or more relays includes one or more of:
a relay, the state of which is indicative of the start of a cycle of operation of the appliance;
a relay, the state of which is indicative of the end of a cycle of operation of the appliance;
a relay, the state of which is indicative of a call for the supply of a utility from a utility source separate from the appliance, preferably a call for the supply of chemicals from a chemical dispenser;
a relay, the state of which is indicative of the door lock status of the appliance;
a relay, the state of which is indicative of the alarm status of the appliance;
a relay, the state of which is indicative of the lint filter lock status of the appliance; and
a relay, the state of which is indicative of the drain input status of the appliance.

29. The device of claim 26 to 28, wherein the signal generated by the appliance is a utility supply signal for controlling the supply of a utility from a utility source separate from the appliance.

30. The device of claim 26 to 29, wherein the appliance is a washing machine, the utility source is a chemical dispenser, and the utility supply signal is a chemical pump signal for controlling the supply of chemicals from the chemical dispenser, wherein the chemical pump signal is preferably one of a formula select signal and a formula reset signal.

31. The device of claim 26 to 30, wherein the utility meter is one of:
a water meter, and the signal generated by the water meter is indicative of the volume of cold water and/or hot water to the appliance; and/or
an electricity meter, and the signal generated by the electricity meter is indicative of the electrical energy delivered to the appliance.

32. An appliance monitoring and reporting system (1, 100) comprising:
a plurality of data acquisition devices (12, 102), each according to any one of claims 26 to 31, and each data acquisition device removably attached to an appliance (10); and
a local gateway (14, 104) configured:
i. to receive and process data packets sent by the communications modules of the one or more data acquisition devices; and
ii. to transmit information indicative of the operation of the corresponding appliances to a remote server, said information based on the received data packets.

## Patentansprüche

1. Geräteüberwachungs- und Meldesystem (1, 100) zum Überwachen eines Geräts (10), das konfiguriert ist, gemäß mehreren Betriebszyklen zu arbeiten, wobei jeder Zyklus durch eine Klassifikation bezeichnet ist, wobei das Gerät ein oder mehrere Relais enthält, die konfiguriert sind, den Betrieb des Geräts zu steuern, wobei jedes Relais einen aktiven Zustand und einen inaktiven Zustand hat, wobei das Überwachungssystem umfasst:
ein Datengewinnungsmodul (12, 102), das konfiguriert ist, Signale vom Gerät zu erfassen oder zu empfangen, die den Betrieb des Geräts anzeigen, wobei das Datengewinnungsmodul umfasst:
einen oder mehrere Sensoren (210) zum Erfassen des Zustands eines Relais des Geräts; und
einen oder mehrere Sensoreingänge, die jeweils konfiguriert sind, ein Signal von einem entsprechenden des einen oder der mehreren Sensoren zu empfangen;
wobei das Datengewinnungsmodul konfiguriert ist, ein Datenpaket zu erzeugen, das Daten enthält, die den Betrieb des Geräts basierend auf den erfassten oder empfangenen Signalen anzeigen; und
ein Datenverarbeitungsmodul (14, 104), das konfiguriert ist, Informationen zu empfangen und zu verarbeiten, die den Betrieb des Geräts anzeigen, wobei die empfangenen Informationen auf den Daten basieren, die im Datenpaket enthalten sind, wobei das Datenverarbeitungsmodul umfasst:
einen Speicher zum Speichern von Verknüpfungen zwischen einer Vielzahl von Klassifikationen und einer entsprechenden Vielzahl von Sätzen von Referenzdaten, wobei die Vielzahl von Sätzen von Referenzdaten eine Vielzahl einzigartiger Zustandsmuster des einen oder der mehreren Relais umfasst; und
einen Prozessor, konfiguriert zum:
Vergleichen der empfangenen Informationen mit der Vielzahl von Sätzen von Referenzdaten;
Identifizieren einer Übereinstimmung der empfangenen Informationen und einem der Sätze von Referenzdaten; und
bei Identifizierung einer Übereinstimmung, Bestimmen der Klassifikation, die mit dem übereinstimmenden Satz von Referenzdaten verknüpft ist.

2. System nach Anspruch 1, wobei zumindest ein Teil des Datengewinnungsmoduls entfernbar an dem Gerät befestigbar ist und wobei vorzugsweise jeder des einen oder der mehreren Sensoren entfernbar an der jeweiligen Komponente des Geräts befestigbar ist.

3. System nach einem vorangehenden Anspruch, wobei das Datengewinnungsmodul ferner einen oder mehrere Geräteeingänge, von welchen jeder konfiguriert ist, ein Signal zu empfangen, das durch das Gerät erzeugt wird, und/oder einen oder mehrere Verbrauchszählereingänge umfasst, von welchen jeder konfiguriert ist, ein Signal zu empfangen, das durch einen Verbrauchszähler erzeugt wird.

4. System nach Anspruch 3, wobei das Signal, das durch das Gerät erzeugt wird, ein Versorgungssignal zum Steuern der Zuleitung von Gütern von einer Versorgungsquelle, getrennt vom Gerät, ist und wobei vorzugsweise die Vielzahl von Sätzen von Referenzdaten Daten umfassen, die sich auf eine Vielzahl einzigartiger Versorgungssignale beziehen.

5. System nach Anspruch 4, wobei das Gerät eine Waschmaschine ist, die Versorgungsquelle ein Chemikalienspender ist und das Versorgungssignal ein Chemikalienpumpsignal zum Steuern der Zuleitung von Chemikalien vom Chemikalienspender ist, wobei das Chemikalienpumpsignal vorzugsweise ein Formelauswahlsignal oder ein Formelrücksetzsignal ist.

6. System nach einem der Ansprüche 2 bis 4, wobei der Verbrauchszähler einer der folgenden ist:
ein Wasserzähler, und das Signal, das durch den Wasserzähler erzeugt wird, zeigt das Volumen von Kaltwasser und/oder Warmwasser an, das dem Gerät zugeleitet wird, und wobei die Vielzahl von Sätzen von Referenzdaten eine Vielzahl einzigartiger Angaben des Volumens von Kaltwasser und/oder Warmwasser umfasst, das dem Gerät zugeleitet wird; oder
ein Stromzähler, und das Signal, das durch den Stromzähler erzeugt wird, zeigt die elektrische Energie an, die dem Gerät zugeleitet wird, und wobei die Vielzahl von Sätzen von Referenzdaten eine Vielzahl einzigartiger Angaben der elektrischen Energie umfasst, die dem Gerät zugeleitet wird.

7. System nach Anspruch 1, wobei jedes der Vielzahl einzigartiger Zustandsmuster des einen oder der mehreren Relais Informationen über die Dauer enthält, für die jedes des einen oder der mehreren Relais im aktiven Zustand und/oder inaktiven Zustand ist, und die Reihenfolge, in der jedes des einen oder der mehreren Relais zwischen dem aktiven und inaktiven Zustand schaltet.

8. System nach Anspruch 1 oder 7, wobei das eine oder die mehreren Relais, die konfiguriert sind, den Betrieb des Geräts zu steuern, eines oder mehrere der folgenden enthalten:
ein Relais, dessen Zustand den Start eines Betriebszyklus des Geräts anzeigt;
ein Relais, dessen Zustand das Ende eines Betriebszyklus des Geräts anzeigt;
ein Relais, dessen Zustand eine Forderung nach einer Zuleitung eines Guts von einer Versorgungsquelle anzeigt, die vom Gerät getrennt ist, vorzugsweise eine Forderung nach der Zuleitung von Chemikalien von einem Chemikalienspender;
ein Relais, dessen Zustand den Türverriegelungsstatus des Geräts anzeigt;
ein Relais, dessen Zustand den Alarmstatus des Geräts anzeigt;
ein Relais, dessen Zustand den Flusenfilterverriegelungsstatus des Geräts anzeigt; und
ein Relais, dessen Zustand den Ablaufeingangsstatus des Geräts anzeigt.

9. System nach einem vorangehenden Anspruch, wobei bei fehlender Übereinstimmung zwischen den empfangenen Informationen und einem der Sätze von Referenzdaten der Prozessor konfiguriert ist zu bestimmen, dass ein Fehler aufgetreten ist, und/oder den Satz von Referenzdaten zu identifizieren, der den empfangenen Informationen am ähnlichsten ist, und die Klassifikation zu bestimmen, die mit dem ähnlichsten Satz von Referenzdaten verknüpft ist, und vorzugsweise im Speicher:
eine neue Klassifikation;
einen neuen Satz von Referenzdaten entsprechend den empfangenen Informationen; und
eine Verknüpfung zwischen der neuen Klassifikation und dem neuen Satz von Referenzdaten zu speichern.

10. System nach einem vorangehenden Anspruch, wobei das Datenverarbeitungsmodul auf einem fernen Server (16) angeordnet ist; und das System ferner ein örtliches Gateway umfasst, das kommunikativ an das Datengewinnungsmodul und das Datenverarbeitungsmodul gekoppelt ist;
wobei das Datengewinnungsmodul konfiguriert ist, das Datenpaket zum örtlichen Gateway zu senden; und
das örtliche Gateway konfiguriert ist, Datenpakete, die durch das Datengewinnungsmodul gesendet werden, zu empfangen und zu verarbeiten, und Informationen, die den Betrieb des Geräts anzeigen, zum fernen Server zu senden, wobei die Informationen auf den empfangenen Datenpaketen basieren.

11. System nach einem der Ansprüche 1 bis 9, wobei das Datenverarbeitungsmodul und zumindest ein Teil des Datengewinnungsmoduls in einem gemeinsamen Gehäuse angeordnet sind.

12. System nach Anspruch 11, wenn abhängig von Ansprüchen 1 bis 9, wobei der eine oder die mehreren Sensoreingänge, Geräteeingänge und/oder Verbrauchszählereingänge einen oder mehrere Anschlüsse in dem gemeinsamen Gehäuse umfassen.

13. Verfahren zum Überwachen eines Geräts (10), das für einen Betrieb gemäß einer Vielzahl von Betriebszyklen konfiguriert ist, wobei jeder Zyklus durch eine Klassifikation bezeichnet ist, wobei jedes Gerät ein oder mehrere Relais enthält, die konfiguriert sind, den Betrieb des Geräts zu steuern, wobei jedes Relais einen aktiven Zustand und einen inaktiven Zustand hat, wobei das Verfahren umfasst:
Erfassen oder Empfangen, durch ein Datengewinnungsmodul (12, 102), von Signalen vom Gerät, die den Betrieb des Geräts anzeigen, wobei der Schritt zum Erfassen von Signalen von dem Gerät ein Erfassen des Zustands eines Relais des Geräts umfasst; und
Senden von Informationen, die den Betrieb des Geräts anzeigen, zu einem Datenverarbeitungsmodul (14, 104), wobei die Informationen auf den Signalen basieren, die durch das Datengewinnungsmodul erfasst oder empfangen werden;
Vergleichen, durch das Datenverarbeitungsmodul, der Informationen, die den Betrieb des Geräts anzeigen, mit einer Vielzahl von Sätzen von Referenzdaten, die in einem Speicher gespeichert sind, wobei die Vielzahl von Sätzen von Referenzdaten eine Vielzahl einzigartiger Zustandsmuster des einen oder der mehreren Relais umfasst;
Identifizieren einer Übereinstimmung der Informationen und eines der Sätze von Referenzdaten; und
Bestimmen einer Klassifikation, die mit dem übereinstimmenden Satz von Referenzdaten verknüpft ist.

14. Verfahren nach Anspruch 13, wobei das Verfahren ferner das Befestigen eines oder mehrerer Sensoren an einer Komponente des Geräts umfasst und das Erfassen ein Erfassen des Zustands der einen oder mehreren Komponenten des Geräts an den Sensoren umfasst.

15. Verfahren nach Anspruch 13 oder Anspruch 14, wobei das Empfangen ein Empfangen eines oder mehrerer Signale umfasst, die durch das Gerät erzeugt werden, und/oder ein Empfangen, durch das Datengewinnungsmodul, eines Signals, das durch einen oder mehrere Verbrauchszähler erzeugt wird.

16. Verfahren nach einem der Ansprüche 13 bis 15, wobei das Signal, das durch das Gerät erzeugt wird, ein Versorgungssignal zum Steuern der Zuleitung von Gütern von einer Versorgungsquelle, getrennt vom Gerät, ist und wobei vorzugsweise die Vielzahl von Sätzen von Referenzdaten Daten umfassen, die sich auf eine Vielzahl einzigartiger Versorgungssignale beziehen.

17. Verfahren nach einem der Ansprüche 13 bis 16, wobei das Gerät eine Waschmaschine (20) ist, die Versorgungsquelle ein Chemikalienspender ist und das Versorgungssignal ein Chemikalienpumpsignal zum Steuern der Zuleitung von Chemikalien vom Chemikalienspender ist, wobei das Chemikalienpumpsignal vorzugsweise eines von einem Formelauswahlsignal und einem Formelrücksetzsignal ist.

18. Verfahren nach einem der Ansprüche 13 bis 17, wobei der Verbrauchszähler einer der folgenden ist:
ein Wasserzähler, und das Signal, das durch den Wasserzähler erzeugt wird, zeigt das Volumen von Kaltwasser und/oder Warmwasser an, das dem Gerät zugeleitet wird, und wobei die Vielzahl von Sätzen von Referenzdaten eine Vielzahl einzigartiger Angaben des Volumens von Kaltwasser und/oder Warmwasser umfasst, das dem Gerät zugeleitet wird; oder
ein Stromzähler, und das Signal, das durch den Stromzähler erzeugt wird, zeigt die elektrische Energie an, die dem Gerät zugeleitet wird, und wobei die Vielzahl von Sätzen von Referenzdaten eine Vielzahl einzigartiger Angaben der elektrischen Energie umfasst, die dem Gerät zugeleitet wird.

19. Verfahren nach einem der Ansprüche 13 bis 18, wobei jedes der Vielzahl einzigartiger Zustandsmuster des einen oder der mehreren Relais Informationen über die Dauer enthält, für die jedes des einen oder der mehreren Relais im aktiven Zustand und/oder inaktiven Zustand ist, und die Reihenfolge, in der jedes des einen oder der mehreren Relais zwischen dem aktiven und inaktiven Zustand schaltet.

20. Verfahren nach einem der Ansprüche 13 bis 19, wobei das eine oder die mehreren Relais, die konfiguriert sind, den Betrieb des Geräts zu steuern, eines oder mehrere der folgenden enthalten:
ein Relais, dessen Zustand den Start eines Betriebszyklus des Geräts anzeigt;
ein Relais, dessen Zustand das Ende eines Betriebszyklus des Geräts anzeigt;
ein Relais, dessen Zustand eine Forderung nach einer Zuleitung eines Guts von einer Versorgungsquelle anzeigt, die vom Gerät getrennt ist, vorzugsweise eine Forderung nach der Zuleitung von Chemikalien von einem Chemikalienspender;
ein Relais, dessen Zustand den Türverriegelungsstatus des Geräts anzeigt;
ein Relais, dessen Zustand den Alarmstatus des Geräts anzeigt;
ein Relais, dessen Zustand den Flusenfilterverriegelungsstatus des Geräts anzeigt; und
ein Relais, dessen Zustand den Ablaufeingangsstatus des Geräts anzeigt.

21. Verfahren nach einem der Ansprüche 13 bis 20, wobei bei fehlender Übereinstimmung zwischen den empfangenen Informationen und einem der Sätze von Referenzdaten das Verfahren ferner die Schritte umfasst:
Bestimmen, dass ein Fehler aufgetreten ist; und/oder
Identifizieren des Satzes von Referenzdaten, der den empfangenen Informationen am ähnlichsten ist; und
Bestimmen der Klassifikation, die mit dem ähnlichsten Satz von Referenzdaten verknüpft ist, und vorzugsweise ferner den Schritt umfasst, im Speicher:
eine neue Klassifikation;
einen neuen Satz von Referenzdaten entsprechend den empfangenen Informationen; und
eine Verknüpfung zwischen der neuen Klassifikation und dem neuen Satz von Referenzdaten zu speichern.

22. Verfahren nach einem der Ansprüche 13 bis 21, wobei das Datenverarbeitungsmodul auf einem fernen Server gelegen ist und ein örtliches Gateway kommunikativ an das Datengewinnungsmodul und das Datenverarbeitungsmodul gekoppelt ist und wobei das Verfahren ferner umfasst:
Erzeugen eines Datenpakets durch das Datengewinnungsmodul, wobei das Datenpaket Daten enthält, die den Betrieb des Geräts basierend auf den erfassten oder empfangenen Signalen anzeigen;
Senden des Datenpakets vom Datengewinnungsmodul zum örtlichen Gateway;
Empfangen des Datenpakets am örtlichen Gateway;
Verarbeiten des Datenpakets am örtlichen Gateway; und
Senden von Informationen, die den Betrieb des Geräts anzeigen, zum fernen Server, wobei die Informationen auf den empfangenen Datenpaketen basieren.

23. Verfahren nach einem der Ansprüche 13 bis 21, wobei das Datenverarbeitungsmodul und zumindest ein Teil des Datengewinnungsmoduls in einem gemeinsamen Gehäuse angeordnet sind, wobei das Datengewinnungsmodul kommunikativ an einen fernen Server extern zum gemeinsamen Gehäuse gekoppelt ist und wobei das Verfahren ferner umfasst:
Handhaben der erfassten oder empfangenen Signale beim Datengewinnungsmodul im gemeinsamen Gehäuse;
Senden der erfassten oder empfangenen Signale vom Datengewinnungsmodul zum Datenverarbeitungsmodul im gemeinsamen Gehäuse;
Empfangen der Signale beim Datenverarbeitungsmodul;
Verarbeiten des Datenpakets beim Datenverarbeitungsmodul; und
Senden von Informationen, die den Betrieb des Geräts anzeigen, zum fernen Server, wobei die Informationen auf den erfassten oder empfangenen Signalen basieren.

24. Datengewinnungsmodul (12, 102) zur Verwendung in einem Geräteüberwachungs- und Meldesystem nach einem der Ansprüche 1 bis 12, wobei das Datengewinnungsmodul konfiguriert ist, Signale vom Gerät zu erfassen oder zu empfangen, die den Betrieb des Geräts anzeigen, und umfassend:
einen oder mehrere Sensoren zum Erfassen des Zustands eines Relais des Geräts; und
einen oder mehrere Sensoreingänge, die jeweils konfiguriert sind, ein Signal von einem entsprechenden des einen oder der mehreren Sensoren zu empfangen;
wobei das Datengewinnungsmodul konfiguriert ist, ein Datenpaket zu erzeugen, das Daten enthält, die den Betrieb des Geräts basierend auf den erfassten oder empfangenen Signalen anzeigen.

25. Datenverarbeitungsmodul (14, 104), das konfiguriert ist, Informationen zu empfangen und zu verarbeiten, die den Betrieb eines Geräts (10) anzeigen, wobei das Gerät ein oder mehrere Relais enthält, die konfiguriert sind, den Betrieb des Geräts zu steuern, wobei jedes Relais einen aktiven Zustand und einen inaktiven Zustand hat, wobei die empfangenen Informationen auf erfassten oder empfangenen Signalen vom Gerät basieren, die Signale enthalten, die den Zustand eines oder mehrerer der Relais anzeigen, wobei das Datenverarbeitungsmodul umfasst:
einen Speicher zum Speichern von Verknüpfungen zwischen einer Vielzahl von Klassifikationen und einer entsprechenden Vielzahl von Sätzen von Referenzdaten, wobei die Vielzahl von Sätzen von Referenzdaten eine Vielzahl einzigartiger Zustandsmuster von einem oder mehreren Relais des Geräts umfasst; und
einen Prozessor, konfiguriert zum:
Vergleichen der empfangenen Informationen mit der Vielzahl von Sätzen von Referenzdaten;
Identifizieren einer Übereinstimmung zwischen den empfangenen Informationen und einem der Sätze von Referenzdaten; und
bei Identifizierung einer Übereinstimmung, Bestimmen der Klassifikation, die mit dem übereinstimmenden Satz von Referenzdaten verknüpft ist.

26. Datengewinnungsvorrichtung (12, 102) zum Überwachen eines Geräts, wobei das Gerät ein oder mehrere Relais umfasst, die konfiguriert sind, den Betrieb des Geräts zu steuern, wobei jedes Relais einen aktiven Zustand und einen inaktiven Zustand hat, wobei die Vorrichtung entfernbar an dem Gerät befestigbar ist, und umfassend:
einen oder mehrere Sensoren, wobei jeder Sensor entfernbar an einem Relais des Geräts zum Erfassen eines Zustands dieses Relais befestigbar ist;
eine Schnittstelle, die konfiguriert ist, wenn der Apparat an dem Gerät befestigt ist, Daten, die den Betrieb des Geräts anzeigen, zu empfangen, zu verarbeiten und zu senden, wobei die Schnittstelle enthält:
einen oder mehrere Sensoreingänge, die jeweils konfiguriert sind, ein Signal von einem entsprechenden des einen oder der mehreren Sensoren zu empfangen;
einen Prozessor, der konfiguriert ist, die Signale zu verarbeiten, die von dem einen oder den mehreren Sensoren empfangen werden, und ein Datenpaket zu erzeugen, das Daten enthält, die den Betrieb des Geräts basierend auf den empfangenen Signalen anzeigen; und
ein Kommunikationsmodul, das konfiguriert ist, das durch den Prozessor erzeugte Datenpaket zu einem örtlichen Gateway oder fernen Server zu senden.

27. Vorrichtung nach Anspruch 26, wobei die Schnittstelle ferner enthält:
einen oder mehrere Geräteeingänge, von welchen jeder konfiguriert ist, ein Signal zu empfangen, das durch das Gerät erzeugt wird, und wobei der Prozessor ferner konfiguriert ist, die Signale zu verarbeiten, die durch das Gerät erzeugt werden; und/oder
einen oder mehrere Verbrauchszählereingänge, von welchen jeder konfiguriert ist, ein Signal zu empfangen, das durch einen Verbrauchszähler erzeugt wird, und wobei der Prozessor ferner konfiguriert ist, die Signale zu verarbeiten, die durch den Verbrauchszähler erzeugt werden.

28. Vorrichtung nach Anspruch 26 oder Anspruch 27, wobei das eine oder die mehreren Relais eines oder mehrere der folgenden enthalten:
ein Relais, dessen Zustand den Start eines Betriebszyklus des Geräts anzeigt;
ein Relais, dessen Zustand das Ende eines Betriebszyklus des Geräts anzeigt;
ein Relais, dessen Zustand eine Forderung nach einer Zuleitung eines Guts von einer Versorgungsquelle anzeigt, die vom Gerät getrennt ist, vorzugsweise eine Forderung nach der Zuleitung von Chemikalien von einem Chemikalienspender;
ein Relais, dessen Zustand den Türverriegelungsstatus des Geräts anzeigt;
ein Relais, dessen Zustand den Alarmstatus des Geräts anzeigt;
ein Relais, dessen Zustand den Flusenfilterverriegelungsstatus des Geräts anzeigt; und
ein Relais, dessen Zustand den Ablaufeingangsstatus des Geräts anzeigt.

29. Vorrichtung nach Anspruch 26 bis 28, wobei das Signal, das durch das Gerät erzeugt wird, ein Versorgungssignal zum Steuern der Zuleitung von Gütern von einer Versorgungsquelle, getrennt vom Gerät, ist.

30. Vorrichtung nach Anspruch 26 bis 29, wobei das Gerät eine Waschmaschine ist, die Versorgungsquelle ein Chemikalienspender ist und das Versorgungssignal ein Chemikalienpumpsignal zum Steuern der Zuleitung von Chemikalien vom Chemikalienspender ist, wobei das Chemikalienpumpsignal vorzugsweise ein Formelauswahlsignal oder ein Formelrücksetzsignal ist.

31. Vorrichtung nach Anspruch 26 bis 30, wobei der Verbrauchszähler einer der folgenden ist:
ein Wasserzähler, und das Signal, das durch den Wasserzähler erzeugt wird, zeigt das Volumen von Kaltwasser und/oder Warmwasser zum Gerät an; und/oder
ein Stromzähler, und das Signal, das durch den Stromzähler erzeugt wird, zeigt die elektrische Energie an, die an das Gerät abgegeben wird.

32. Geräteüberwachungs- und Meldesystem (1, 100), umfassend:
mehrere Datengewinnungsvorrichtungen (12, 102), jeweils nach einem der Ansprüche 26 bis 31, und wobei jede Datengewinnungsvorrichtung entfernbar an einem Gerät (10) befestigt ist; und
ein örtliches Gateway (14, 104), konfiguriert:
i. Datenpakete, die durch die Kommunikationsmodule der einen oder mehreren Datengewinnungsvorrichtungen gesendet werden, zu empfangen und zu verarbeiten; und
ii. Informationen, die den Betrieb der entsprechenden Geräte anzeigen, zu einem fernen Server zu senden, wobei die Informationen auf den empfangenen Datenpaketen basieren.

## Revendications

1. Système de surveillance et de rapport d'appareil (1, 100) pour surveiller un appareil (10) configuré pour fonctionner selon une pluralité de cycles de fonctionnement, chaque cycle étant désigné par une classification, l'appareil comprenant un ou plusieurs relais configurés pour commander le fonctionnement de l'appareil, chaque relais ayant un état actif et un état inactif, le système de surveillance comprenant :
un module d'acquisition de données (12, 102) configuré pour détecter ou recevoir à partir de l'appareil des signaux indiquant le fonctionnement de l'appareil, le module d'acquisition de données comprenant :
un ou plusieurs capteurs (210) pour détecter l'état d'un relais de l'appareil ; et
une ou plusieurs entrées de capteur, chacune étant configurée pour recevoir un signal provenant d'un capteur correspondant parmi le ou les capteurs ;
le module d'acquisition de données étant configuré pour générer un paquet de données contenant des données indiquant le fonctionnement de l'appareil sur la base des signaux détectés ou reçus ; et
un module de traitement de données (14, 104) configuré pour recevoir et traiter des informations indiquant le fonctionnement de l'appareil, les informations reçues étant basées sur des données contenues dans le paquet de données, le module de traitement de données comprenant :
une mémoire pour stocker des associations entre une pluralité de classifications et une pluralité correspondante d'ensembles de données de référence, la pluralité d'ensembles de données de référence comprenant une pluralité de motifs d'état uniques du ou des relais ; et
un processeur configuré pour :
comparer les informations reçues à la pluralité d'ensembles de données de référence ;
identifier une correspondance entre les informations reçues et l'un des ensembles de données de référence ; et
lors de l'identification d'une correspondance, déterminer la classification associée à l'ensemble correspondant de données de référence.

2. Système selon la revendication 1, au moins une partie du module d'acquisition de données pouvant être fixée de manière amovible à l'appareil, et de préférence, chacun du ou des capteurs pouvant être fixé de manière amovible au composant respectif de l'appareil.

3. Système selon n'importe quelle revendication précédente, le module d'acquisition de données comprenant en outre une ou plusieurs entrées d'appareil, chacune étant configurée pour recevoir un signal généré par l'appareil, et/ou une ou plusieurs entrées de compteur utilitaire, chacune étant configurée pour recevoir un signal généré par un compteur utilitaire.

4. Système selon la revendication 3, le signal généré par l'appareil étant un signal d'alimentation électrique pour commander l'alimentation d'un utilitaire à partir d'une source utilitaire séparée de l'appareil, et de préférence, la pluralité d'ensembles de données de référence comprenant des données se rapportant à une pluralité de signaux d'alimentation utilitaire unique.

5. Système selon la revendication 4, dans lequel l'appareil est une machine à laver, la source utilitaire est un distributeur chimique, et le signal d'alimentation utilitaire est un signal de pompe chimique pour commander l'alimentation en produits chimiques à partir du distributeur de produits chimiques, le signal de pompe chimique étant de préférence l'un d'un signal de sélection de formule et d'un signal de réinitialisation de formule.

6. Système selon l'une quelconque des revendications 2 à 4, le compteur utilitaire étant l'un parmi :
un compteur d'eau et le signal généré par le compteur d'eau indiquant le volume d'eau froide et/ou d'eau chaude fournie à l'appareil, et la pluralité d'ensembles de données de référence comprenant une pluralité d'indications uniques du volume d'eau froide et/ou d'eau chaude fournie à l'appareil ; ou
un compteur d'électricité et le signal généré par le compteur d'électricité indiquant l'énergie électrique fournie à l'appareil, et la pluralité d'ensembles de données de référence comprenant une pluralité d'indications uniques de l'énergie électrique fournie à l'appareil.

7. Système selon la revendication 1, chacun de la pluralité de motifs d'état uniques du ou des relais comprenant des informations sur la durée pour laquelle chacun du ou des relais est dans l'état actif et/ou l'état inactif, et l'ordre dans lequel chacun du ou des relais commute entre les états actif et inactif.

8. Système selon la revendication 1 ou la revendication 7, le ou les relais configurés pour commander le fonctionnement de l'appareil comprenant un ou plusieurs des éléments suivants :
un relais, dont l'état indique le début d'un cycle de fonctionnement de l'appareil ;
un relais, dont l'état indique la fin d'un cycle de fonctionnement de l'appareil ;
un relais, dont l'état indique un appel pour l'alimentation d'un utilitaire à partir d'une source utilitaire séparée de l'appareil, de préférence un appel pour l'alimentation en produits chimiques à partir d'un distributeur de produits chimiques ;
un relais, dont l'état indique l'état de verrouillage de porte de l'appareil;
un relais, dont l'état indique l'état d'alarme de l'appareil;
un relais, dont l'état indique l'état de verrouillage de filtre à peluches de l'appareil;
et
un relais, dont l'état indique l'état d'entrée de drain de l'appareil.

9. Système selon l'une quelconque des revendications précédentes, dans lequel, en l'absence d'une correspondance entre les informations reçues et l'un des ensembles de données de référence, le processeur est configuré pour déterminer qu'une erreur s'est produite, et/ou identifier l'ensemble de données de référence qui est le plus proche des informations reçues et déterminer la classification associée à l'ensemble le plus proche de données de référence, et de préférence pour stocker dans la mémoire :
une nouvelle classification ;
un nouvel ensemble de données de référence correspondant aux informations reçues ; et
une association entre la nouvelle classification et le nouvel ensemble de données de référence.

10. Système selon l'une quelconque des revendications précédentes, le module de traitement de données étant situé sur un serveur distant (16); et le système comprenant en outre une passerelle locale couplée en communication au module d'acquisition de données et au module de traitement de données ;
le module d'acquisition de données étant configuré pour transmettre le paquet de données à la passerelle locale ; et
la passerelle locale étant configurée pour recevoir et traiter des paquets de données envoyés par le module d'acquisition de données, et transmettre des informations indiquant le fonctionnement de l'appareil au serveur distant, lesdites informations étant basées sur les paquets de données reçus.

11. Système selon l'une quelconque des revendications 1 à 9, le module de traitement de données et au moins une partie du module d'acquisition de données étant situés à l'intérieur d'un logement commun.

12. Système selon la revendication 11, lorsqu'elle est dépendante des revendications 1 à 9, la ou les entrées de capteur, entrées d'appareil et/ou entrées de compteur utilitaire comprenant un ou plusieurs ports dans le logement commun.

13. Procédé de surveillance d'un appareil (10) configuré pour fonctionner selon une pluralité de cycles de fonctionnement, chaque cycle étant désigné par une classification, l'appareil comprenant un ou plusieurs relais configurés pour commander le fonctionnement de l'appareil, chaque relais ayant un état actif et un état inactif, le procédé comprenant :
la détection ou la réception, par un module d'acquisition de données (12, 102), de signaux provenant de l'appareil indiquant le fonctionnement de l'appareil, l'étape de détection de signaux provenant de l'appareil comprenant la détection de l'état d'un relais de l'appareil;
l'envoi d'informations indiquant le fonctionnement de l'appareil à un module de traitement de données (14, 104), les informations étant basées sur des signaux détectés ou reçus par le module d'acquisition de données ;
la comparaison, par le module de traitement de données, des informations indiquant le fonctionnement de l'appareil avec une pluralité d'ensembles de données de référence stockées dans une mémoire, la pluralité d'ensembles de données de référence comprenant une pluralité de motifs d'état uniques du ou des relais ;
l'identification d'une correspondance entre les informations et l'un des ensembles de données de référence ; et
la détermination de la classification associée à l'ensemble correspondant de données de référence.

14. Procédé selon la revendication 13, le procédé comprenant en outre la fixation d'un ou plusieurs capteurs à un composant de l'appareil, et la détection comprenant la détection de l'état du ou des composants de l'appareil au niveau des capteurs.

15. Procédé selon la revendication 13 ou la revendication 14, la réception consistant à recevoir un ou plusieurs signaux générés par l'appareil, et/ou à recevoir, par le module d'acquisition de données, un signal généré par un ou plusieurs compteurs utilitaires.

16. Procédé selon l'une quelconque des revendications 13 à 15, le signal généré par l'appareil étant un signal d'alimentation utilitaire pour commander l'alimentation d'un utilitaire à partir d'une source utilitaire séparée de l'appareil et, de préférence, la pluralité d'ensembles de données de référence comprenant des données se rapportant à une pluralité de signaux d'alimentation utilitaires uniques.

17. Procédé selon l'une quelconque des revendications 13 à 16, l'appareil étant une machine à laver (20), la source utilitaire étant un distributeur chimique, et le signal d'alimentation utilitaire étant un signal de pompe chimique pour commander l'alimentation en produits chimiques à partir du distributeur de produits chimiques, le signal de pompe chimique étant de préférence l'un d'un signal de sélection de formule et d'un signal de réinitialisation de formule.

18. Procédé selon l'une quelconque des revendications 13 à 17, le compteur utilitaire étant l'un parmi ;
un compteur d'eau et le signal généré par le compteur d'eau indiquant le volume d'eau froide et/ou d'eau chaude fournie à l'appareil, et la pluralité d'ensembles de données de référence comprenant une pluralité d'indications uniques du volume d'eau froide et/ou d'eau chaude fournie à l'appareil; ou
un compteur d'électricité et le signal généré par le compteur d'électricité indiquant l'énergie électrique fournie à l'appareil, et la pluralité d'ensembles de données de référence comprenant une pluralité d'indications uniques de l'énergie électrique fournie à l'appareil.

19. Procédé selon l'une quelconque des revendications 13 à 18, chaque motif de la pluralité de motifs d'état uniques du ou des relais comprenant des informations sur la durée pour laquelle chacun du ou des relais est dans l'état actif et/ou l'état inactif, et l'ordre dans lequel chacun du ou des relais commute entre les états actif et inactif.

20. Procédé selon l'une quelconque des revendications 13 à 19, le ou les relais étant configurés pour commander le fonctionnement de l'appareil comprenant un ou plusieurs des éléments suivants :
un relais, dont l'état indique le début d'un cycle de fonctionnement de l'appareil;
un relais, dont l'état indique la fin d'un cycle de fonctionnement de l'appareil;
un relais, dont l'état indique un appel pour l'alimentation d'un utilitaire à partir d'une source utilitaire séparée de l'appareil, de préférence un appel pour l'alimentation en produits chimiques à partir d'un distributeur de produits chimiques ;
un relais, dont l'état indique l'état de verrouillage de porte de l'appareil;
un relais, dont l'état indique l'état d'alarme de l'appareil;
un relais, dont l'état indique l'état de verrouillage de filtre à peluches de l'appareil;
et
un relais, dont l'état indique l'état d'entrée de drain de l'appareil.

21. Procédé selon l'une quelconque des revendications 13 à 20, dans lequel, en l'absence d'une correspondance entre les informations reçues et l'un des ensembles de données de référence, le procédé comprend en outre les étapes consistant à :
déterminer qu'une erreur s'est produite ; et/ou
identifier l'ensemble de données de référence qui est le plus proche des informations reçues ; et
déterminer la classification associée à l'ensemble le plus proche de données de référence, et de préférence comprend en outre l'étape de stockage dans la mémoire :
d'une nouvelle classification ;
d'un nouvel ensemble de données de référence correspondant aux informations reçues ; et
d'une association entre la nouvelle classification et le nouvel ensemble de données de référence.

22. Procédé selon l'une quelconque des revendications 13 à 21, le module de traitement de données étant situé sur un serveur distant et une passerelle locale étant couplée en communication au module d'acquisition de données et au module de traitement de données, le procédé comprenant en outre :
la génération d'un paquet de données par le module d'acquisition de données, le paquet de données contenant des données indiquant le fonctionnement de l'appareil sur la base des signaux détectés ou reçus ;
la transmission du paquet de données provenant du module d'acquisition de données à la passerelle locale ;
la réception du paquet de données au niveau de la passerelle locale ;
le traitement du paquet de données au niveau de la passerelle locale ; et
la transmission d'informations indiquant le fonctionnement de l'appareil au serveur distant, lesdites informations étant basées sur les paquets de données reçus.

23. Procédé selon l'une quelconque des revendications 13 à 21, le module de traitement de données et au moins une partie du module d'acquisition de données étant situés à l'intérieur d'un logement commun, le module de traitement de données étant couplé en communication à un serveur distant externe au logement commun, et le procédé comprenant en outre :
la gestion des signaux détectés ou reçus au niveau du module d'acquisition de données dans le logement commun ;
l'envoi des signaux détectés ou reçus provenant du module d'acquisition de données au module de traitement de données dans le logement commun ;
la réception des signaux au niveau du module de traitement de données ;
le traitement du paquet de données au niveau du module de traitement de données ; et
la transmission d'informations indiquant le fonctionnement de l'appareil au serveur distant, lesdites informations étant basées sur les signaux détectés ou reçus.

24. Module d'acquisition de données (12, 102) pour être utilisé dans un système de surveillance et de rapport d'appareil selon l'une quelconque des revendications 1 à 12, le module d'acquisition de données étant configuré pour détecter ou recevoir à partir de l'appareil des signaux indiquant le fonctionnement de l'appareil, et comprenant:
un ou plusieurs capteurs pour détecter l'état d'un relais de l'appareil; et
une ou plusieurs entrées de capteur, chacune étant configurée pour recevoir un signal provenant d'un capteur correspondant parmi le ou les capteurs ;
le module d'acquisition de données étant configuré pour générer un paquet de données contenant des données indiquant le fonctionnement de l'appareil sur la base des signaux détectés ou reçus.

25. Module de traitement de données (14, 104) configuré pour recevoir et traiter des informations indiquant le fonctionnement d'un appareil (10), l'appareil comprenant un ou plusieurs relais configurés pour commander le fonctionnement de l'appareil, chaque relais ayant un état actif et un état inactif, les informations reçues étant basées sur des signaux détectés ou reçus provenant de l'appareil, comprenant des signaux indiquant l'état d'un ou de plusieurs des relais, le module de traitement de données comprenant:
une mémoire pour stocker des associations entre une pluralité de classifications et une pluralité correspondante d'ensembles de données de référence, la pluralité d'ensembles de données de référence comprenant une pluralité de motifs d'état uniques d'un ou plusieurs relais de l'appareil;
et
un processeur configuré pour :
comparer les informations reçues à la pluralité d'ensembles de données de référence ;
identifier une correspondance entre les informations reçues et l'un des ensembles de données de référence ; et
lors de l'identification d'une correspondance, déterminer la classification associée à l'ensemble correspondant de données de référence.

26. Dispositif d'acquisition de données (12, 102) pour surveiller un appareil, l'appareil comprenant un ou plusieurs relais configurés pour commander le fonctionnement de l'appareil, chaque relais ayant un état actif et un état inactif, le dispositif pouvant être fixé de manière amovible à l'appareil et comprenant:
un ou plusieurs capteurs, chaque capteur pouvant être fixé de manière amovible à un relais de l'appareil pour détecter un état de ce relais ;
une interface configurée, lorsque l'appareil est fixé à l'appareil, pour recevoir, traiter et transmettre des données indiquant le fonctionnement de l'appareil, l'interface comprenant:
une ou plusieurs entrées de capteur, chacune étant configurée pour recevoir un signal provenant d'un capteur correspondant parmi le ou les capteurs ;
un processeur configuré pour traiter les signaux reçus provenant du ou des capteurs et pour générer un paquet de données contenant des données indiquant le fonctionnement de l'appareil sur la base des signaux reçus ; et
un module de communication configuré pour transmettre le paquet de données généré par le processeur à une passerelle locale ou à un serveur distant.

27. Dispositif selon la revendication 26, l'interface comprenant en outre :
une ou plusieurs entrées d'appareil, chacune étant configurée pour recevoir un signal généré par l'appareil, et le processeur étant en outre configuré pour traiter les signaux générés par l'appareil; et/ou
une ou plusieurs entrées de compteur utilitaire, chacune étant configurée pour recevoir un signal généré par un compteur utilitaire, et le processeur étant en outre configuré pour traiter les signaux générés par le compteur utilitaire.

28. Dispositif selon la revendication 26 ou la revendication 27, le ou les relais comprenant un ou plusieurs éléments parmi :
un relais, dont l'état indique le début d'un cycle de fonctionnement de l'appareil;
un relais, dont l'état indique la fin d'un cycle de fonctionnement de l'appareil;
un relais, dont l'état indique un appel pour l'alimentation d'un utilitaire à partir d'une source utilitaire séparée de l'appareil, de préférence un appel pour l'alimentation en produits chimiques à partir d'un distributeur de produits chimiques ;
un relais, dont l'état indique l'état de verrouillage de porte de l'appareil;
un relais, dont l'état indique l'état d'alarme de l'appareil;
un relais, dont l'état indique l'état de verrouillage de filtre à peluches de l'appareil;
et
un relais, dont l'état indique l'état d'entrée de drain de l'appareil.

29. Dispositif selon les revendications 26 à 28, le signal généré par l'appareil étant un signal d'alimentation utilitaire pour commander l'alimentation d'un utilitaire à partir d'une source utilitaire séparée de l'appareil.

30. Dispositif selon les revendications 26 à 29, l'appareil étant une machine à laver, la source utilitaire étant un distributeur chimique, et le signal d'alimentation utilitaire étant un signal de pompe chimique pour commander l'alimentation en produits chimiques à partir du distributeur de produits chimiques, le signal de pompe chimique étant de préférence l'un d'un signal de sélection de formule et d'un signal de réinitialisation de formule.

31. Dispositif selon les revendications 26 à 30, le compteur utilitaire étant l'un parmi :
un compteur d'eau et le signal généré par le compteur d'eau indiquant le volume d'eau froide et/ou d'eau chaude à l'appareil; et/ou
un compteur d'électricité et le signal généré par le compteur d'électricité indiquant l'énergie électrique délivrée à l'appareil.

32. Système de surveillance et de rapport d'appareil (1, 100) comprenant:
une pluralité de dispositifs d'acquisition de données (12, 102), chacun selon l'une quelconque des revendications 26 à 31, et chaque dispositif d'acquisition de données étant fixé de manière amovible à un appareil (10) ; et
une passerelle locale (14, 104) configurée :
i. pour recevoir et traiter des paquets de données envoyés par les modules de communication du ou des dispositifs d'acquisition de données ; et
ii. pour transmettre des informations indiquant le fonctionnement des appareils correspondants à un serveur distant, lesdites informations étant basées sur les paquets de données reçus.
